# EUROPEAN PATENT SPECIFICATION

(11) **EP 1 497 026 B1**
(45) Date of publication and mention of the grant of the patent: **09.12.2015**
(21) Application number: 03744498.1
(22) Date of filing: 20.03.2003
(51) Int. Cl.: B01J 20/32

(54) **POLYMERIC COMPOSITE CHIRAL STATIONARY PHASES OF BRUSH TYPE**
POLYMERE ZUSAMMENGESETZTE CHIRALE STATIONÄRE PHASEN VOM BÜRSTENTYP
PHASES STATIONNAIRES CHIRALES DE COMPOSITE POLYMERE DE TYPE BROSSE

(30) Priority: 20.03.2002 IT RM20020155
(43) Date of publication of application: 19.01.2005
(73) Proprietor: UNIVERSITA' DEGLI STUDI DI ROMA "LA SAPIENZA", 00185 Roma (IT)
(72) Inventor: GASPARRINI, Francesco, I-00179 Roma (IT); MISITI, Domenico, I-00199 Roma (IT); VILLANI, Claudio, I-00196 Roma (IT)
(74) Representative: Longoni, Alessandra
(86) International application number: PCT/IT2003/000164
(87) International publication number: WO 2003/079002

(56) References cited:
- EP-A- 0 249 078
- EP-A- 0 379 917
- EP-A- 0 780 408
- US-A- 5 439 979
- HIDEKO KANAZAWA: "Temperature-responsive chromatography using poly-(N-isopropylacrylamide) Hydrogel- Modified silica" ANALYTICAL SCIENCES, vol. 18, January 2002 (2002-01), pages 45-48, XP002245104 TOKYO, JAPAN
- PATENT ABSTRACTS OF JAPAN vol. 010, no. 369 (P-525), 10 December 1986 (1986-12-10) & JP 61 162750 A (TORAY IND INC), 23 July 1986 (1986-07-23)
- B. GALLI: "HPLC Resolution of Atropoisomeric Compounds on a CSP Derived From (1R; 2R)-Diaminocyclohexane" CHIRALITY, vol. 4, no. 6, 1992, pages 384-388, XP008018676

## Description

### Technical Field of the Invention

The invention is set in the field of enantioselective molecular recognition of middle-low molecular weight molecules. In particular, the invention relates to novel polymeric composite chiral stationary phases of brush type suitable for the separation and/or the purification of enantiomers of organic and organometallic compounds at an analytical and preparative level. The invention further relates to the preparation and to the applications of such phases.

### Prior state of the art

The Classic methods for enantiomer separation envisage the formation of diastereomeric derivatives by interaction with a chiral agent and subsequent separation of the diastereoisomer exhibiting different chemical and physical features, by crystallisation, distillation, extraction or chromatography. Recent technological developments enabled to tackle the problem in a more profitable manner, exploiting the high efficiency of the modern chromatography techniques and the employ of chiral stationary phases, in which an enantiomer of a chiral molecule (selector) is immobilized on an insoluble support. By this approach, it is possible to separate the enantiomers of various compounds, over short times and in a reproducible manner, both at an analytical level (micrograms) and at a semipreparative or preparative level (grams, kg, etc.).

The chiral stationary phases described in literature employ a wide range of chiral selectors. There are commonly employed low-molecular weight molecules, totally synthetic or derived from the natural chiral pool [Gasparrini F, Misiti D, Villani C, High-performance liquid chromatography chiral stationary phases based on low-molecular-mass selectors, J. Chromatogr. A 2001, 906, 35-50], or high-molecular weight polymer molecules, in this case as well synthesised *ex novo* or obtained by modifications of natural chiral polymers [Haginaka J, protein-based chiral stationary phases for high-performance liquid chromatography enantioseparations, J. Chromatogr. A 2001, 906, 253-73; Yashima E, Polysaccharide-based chiral stationary phases for high-performance liquid chromatographic enantioseparation J. Chromatogr. A 2001, 906, 105-25].

Low-molecular weight selectors, once immobilized on the insoluble silica based support, entail the advantage of ensuring quick processes of solute mass transfer between the mobile and the stationary phases, resulting in a high chromatographic efficiency, which however is often accompanied by a modest enantioselectivity and, above all, by a limited application field.

The chromatographic columns prepared with such chiral stationary phases likewise exhibit a high permeability, thereby allowing to operate with modest pressure drops also at high linear velocities of the in-column eluent.

The polymeric selectors immobilized according to the classic procedure often lead to chromatographic columns generally characterised by a poor chromatographic efficiency and by a reduced permeability, whereas their three-dimensional structure may favour the enantiomer discrimination process independently from the presence of specific functional groups (shape selectivity), resulting in a good enantioselectivity and in a wide application field.

A class of widely marketed polymeric chiral stationary phases consists of polysaccharide derivatives (cellulose, amilose) physically adsorbed on macroporous silica microparticles. Several such stationary phases, e.g. cellulose tris-(3,5-dimethylphenylcarbamate) and amilose tris-(3,5-dimethylphenylcarbamate), are capable of separating the enantiomers of a large number of chiral species, and find wide application in different fields of organic and pharmaceutical chemistry [Okamoto Y, Yashima E, Polysaccharide derivatives for chromatographic separation of enantiomers, Angew. Chem. Int. Ed. 1998, 37, 1020-43]. However, such phases entail drawbacks, essentially due to the fact that the polymeric chiral selector is not covalently bound to the silica-based support: this precludes the employ of eluents in which the same selector is soluble (chlorinated solvents, THF, etc.) and often poses serious limitations in preparative applications and anyhow in cases when the solute is insoluble in the mobile phase compatible with the stationary phase (hexane/alcohol mixtures).

A second drawback concerns the kinetic performances of the stationary phase, which are often deteriorated due to the thickness of the polymeric layer slowing down solute transfer between stationary and mobile phases.

EP 0 249 078 (MERCK PATENT GMBH) reports adsorbents based on optically active poly(meth)-acrylamides which is said to be used for separating racemic mixtures into their optical antipodes.

Kanazawa H. et al. [Analytical Sciences, vol. 18, pages 45-48 (2002)] reports an alleged new method of HPLC using packing materials modified with cross-linked poly(N-isopropylacrylamide) hydrogel and involves temperature-responsive chromatographic separation.

JP 61 162750 (TORAY IND INC) reports an alleged new packing material for optical resolution.

US 5 493 979 (MACK MARGOT et al.) reports separating materials for thin-layer chromatography, based on sorbent-coated supports.

EP 0 780 408 reports chiral polymers which are bonded to a support and have improved properties, a process for the preparation of these materials and their use as chiral stationary phases in the chromatographic separation of optical isomers, in particular of racemates into their enantiomers.

Galli B. et al. (Chirality, vol. 4, no. 6, 1992, pages 384-388) reports the preparation and a preliminary chromatographic evaluation of an alleged novel polymeric chiral stationary phase based on a radical copolymerization process between mercapto-propyl silica and N,N'-diacryloyl-(1R,2R)-diaminocyclohexane.

EP 0 379 917 (BAYER AG) reports an optically active N-(meth)acryloyl amino acid amide which is polymerized and optionally bound to a support such as silica, and can then be used for the chromatographic separation of racemic mixtures of pharmacologically active compounds.

The article "Temperature-responsive chromatography using poly-(N-isopropylacrylamide) Hydrogel-Modified silice" (Hideko Kanazawa - Analytical Sciences - vol.18 (2002-01), pages 45-48 - XP00224104) refers to a method of HPLC using packing materials modified with cross-linked poly(N-isopropylacrylamide) hydrogel and involves temperature-responsive chromatographic separation.

EP 0 780 408 (BAYER AG) reports chiral polymers which are bonded to a support and have improved properties, a process for the preparation of these materials and their use as chiral stationary phases in the chromatographic separation of optical isomers, in particular of racemates into their enantiomers.

Although different types of polymeric chiral stationary phases for chromatographic applications are known, there exists in the state of the art no stationary phase of practical use concomitantly having high enantioselectivity, high chromatographic efficiency and wide application field associated to high permeability and full compatibility with organic and aqueous solvents of various nature.

Scope of the present invention is to provide novel polymeric composite chiral stationary phases of brush type capable of combining the high chromatographic efficiency and the elevated permeability typical of the monomeric chiral stationary phases of brush type to the good enantioselectivity and the wide application field of the classical polymeric phases.

A further scope of the invention is to provide stable stationary phases having a fully compatibility with the common chromatographic eluents of organic or aqueous nature and an elevated chemical passivation.

### Summary of the Invention

The present invention is based on the unexpected discovery that novel polymeric composite chiral stationary phases having the desired above-mentioned features are obtainable by chiral monomer polymerisation directly from the surface of solid supports. Such polymers covalently immobilized on a solid support form chiral stationary phases suitable for the resolution of racemic mixtures and for the purification of individual enantiomers, and in general of stereoisomers, of organic and organometallic compounds, as well as for their chemical purification.

Object of the invention are novel polymeric composite chiral stationary phases of "brush-type" containing a chiral polyamide polymer covalently bound to the inorganic matrix and obtained by polymerisation of chiral monomers N-(meta)acryloyl derivatives of diamines, amines, amino alcohols, amino acids, all in form of optically pure enantiomers.

Such polymers covalently immobilized on a solid support form chiral stationary phases suitable for the resolution of racemic mixtures and for the purification of individual enantiomers, and in general of stereoisomers, of organic and organometallic compounds, as well as their chemical purification. In particular, the invention is based on a novel method for the preparation of polymeric chiral stationary phases in which the polymer is synthesized directly onto the surface of the solid support starting from chiral monomers, in an enantiomerically pure form. The method foresees that the solid support bearing -NH₂, -OH, -SH groups onto its surface be reacted with an active form of an α, α' -azo-bis-(cyanocarboxylic) acid, which is thus immobilized on the support surface. Then, the reaction product obtained is reacted with monomers in form of pure enantiomers, selected among chiral N-(meta)acryloyl derivatives of amines, diamines, amino alcohols, amino acids, and such monomers are polymerised directly onto the support surface. In fact, the residue containing the azo group is capable, by thermal treatment, of generating radical species. These trigger the polymerisation reaction of the monomeric units by an attack to the activated double C-C bond. The originality of the approach leads to the obtainment of a chiral polymer of brush type, i.e. bearing side residues that are regularly oriented and perpendicular to the polymer structure and to the same structure of the solid support, to which the polymer is covalently bound.

The novel chiral stationary phases thus obtained combine the advantages of the monomeric chiral stationary phases of brush type (high efficiency, elevated permeability and wide compatibility with solvents) to those of the polymeric phases (wide application field and good enantioselectivity, etc.). Hence the new hybrid name of polymeric composite chiral stationary phases of brush type.

The stationary phases described in the present application are used in the separation of enantiomers of organic and organometallic compounds, in high-efficiency chromatographic processes as well as in low-efficiency chromatographic processes, both with organic and aqueous solvents. Other objects of the invention will be apparent in the light of the following detailed description.

### Description of the figures

Figure 1: figure 1 illustrates the synthesis process of two stationary phases according to the present invention. The chiral stationary phase of general structure as per structure 1 provides as selector a chiral polymer obtained by polymerisation of a N,N'-diacryloyl derivative of a diamine. Structure 2 provides a polymer obtained by polymerisation of an N-acryloyl derivative of variously substituted monoamines.
Figure 2: figure 2 illustrates the synthesis process of a chiral stationary phase providing as selector a polymer obtained using N-(2-acryloylamino-(1R,2R)-cyclohexyl)-acrylamide as monomer.
Figure 3: figure 3 reports examples of chiral monomers used in the present invention.
Figure 4: figure 4 reports a few examples of compounds resolved in their enantiomer form by chromatography on stationary phase according to the invention.

### Detailed description of the Invention

The method for the preparation of the polymeric chiral stationary phases according to the invention provides the direct polymerisation of monomers starting from the surface of the solid support. The microparticles used may be silica, silicates, aluminates, or it may consist of polymeric resins like polyacrylamide, polymethacrylate, polystyrene or of polymeric materials like carbohydrates. Macroporous silica is used as preferred inert support, and it consists of particles having a size in the order of from 1 to 10 µm, and a surface of about from 100 to 120 m²/g. The pores have an average diameter of about 300 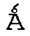 and a total volume equal to about 0.93 ml/g.

The surface of the solid support material is usually pretreated with reagents capable of inserting functional groups facilitating the subsequent immobilization of the chiral polymer. These functional groups may be -NH₂, -OH, -SH groups, or any other equivalent group. In case meso/macroporous silica is used, the surface may be activated with 3-aminopropyl-trialkoxy silane, specifically 3-aminopropyl-triethoxy silane or equivalent reactants. The reaction is conducted in anhydrous organic solvent, e.g. toluene, at reflux temperature under inert atmosphere.

The material thus obtained is subsequently activated with a bifunctional reactant comprising a -N=N- (azo) group, under reaction conditions allowing reactant immobilization, yet preserving the azo group capability of generating radical species.

In particular, this activation step envisages the reaction between the support material functionalised as above disclosed and a chemically reactive and bifunctional form of an α,α'-azo-bis-(cyanocarboxyl) acid like the 4,4'-azo-bis-(4-cyanopentanoic) acid (also denominated 4,4'-azo-bis-(4-cyano valeric) acid) or the 4,4'-azo-bis-(4-cyanobutanoic) acid. Chemically reactive forms are the corresponding dichlorides or anhydrides.

The reaction is conducted in anhydrous organic solvent, e.g. toluene, and at low temperature, using a stoichiometric excess of the active form of the azo derivative. This, reacting with the functional groups (NH2, OH, etc.) onto the surface of the solid support, will be immobilized to the same surface by means of an amide, ester or thioester covalent bond, depending on the material used. The support treated as described is subsequently contacted to an anhydrous organic solution of the N-(meta)acryloyl chiral monomer in form of enantiomer having an elevated enantiomeric excess, or preferably in an optically pure form. The reaction is conducted under inert atmosphere and at a temperature sufficiently high to induce formation by the azo-derivative of free radicals capable of initiating the polymerisation process. Heating to a >50°C temperature or preferably to a ≥60°C temperature was demonstrated to suffice.

In a preferred embodiment of the invention, the polymerisation is conducted on pretreated macroporous silica gel, and it leads to the formation of a brush type polymer (which is ordered), allowing easy access of the analytes in the pore structure of the same support.

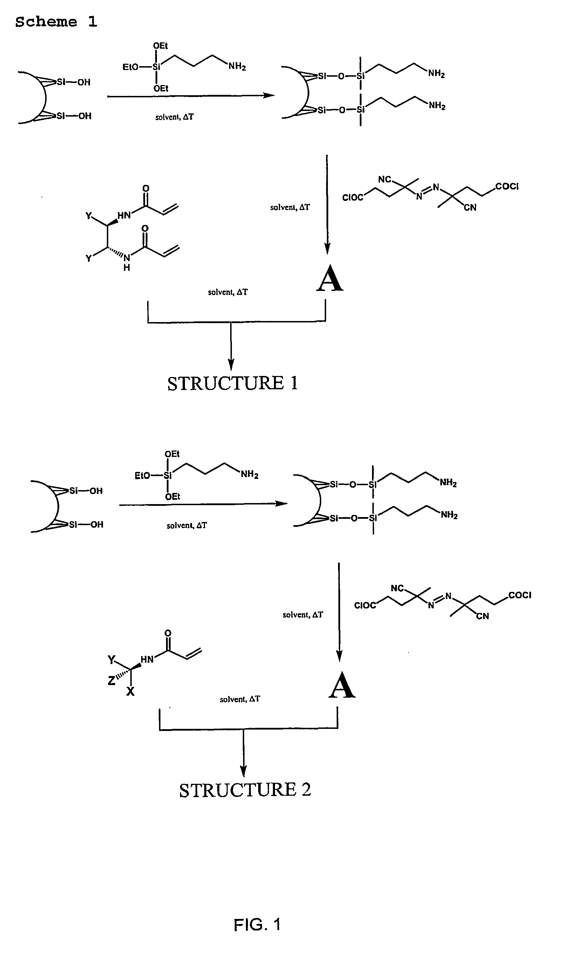

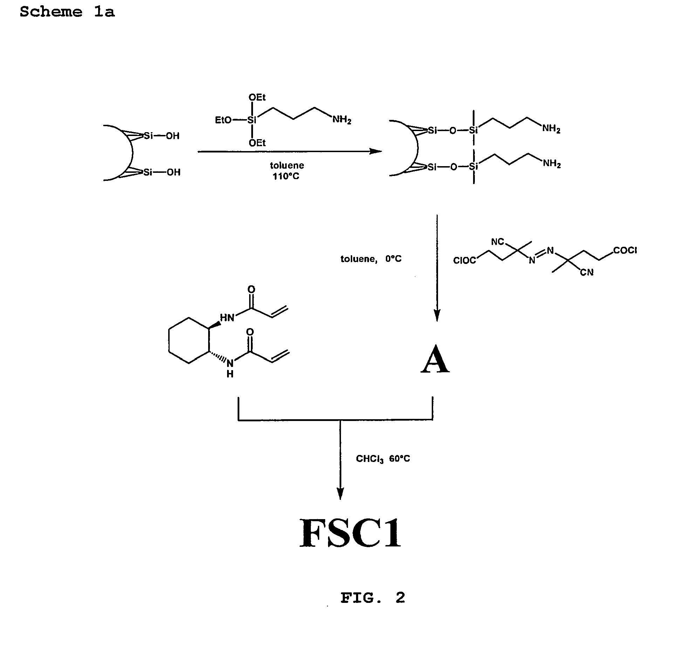

The preparation method is illustrated in its entirety in figure 1, in which stationary phases of structures 1 or 2 were obtained using chiral monomers of different general formula. The same method is illustrated in figure 2, summarising the synthesis of the chiral stationary phase 1 (CSP1) which represents the preferred embodiment of the invention.

The monomers used in accordance with the present invention are chiral compounds in which one or more amine or hydroxyl groups are acylated in form of ester or of amide with a residue of acrylic, metacrylic, cinnamic acid or of other α-β unsaturated carboxylic acid, containing C-C double bonds capable of polymerising. In general, the monomeric compound may be a derivative of a chiral diamine bearing a vinyl fragment or other C-C double bond, it also capable of polymerising. An example of suitable monomer is that represented by the general formula I 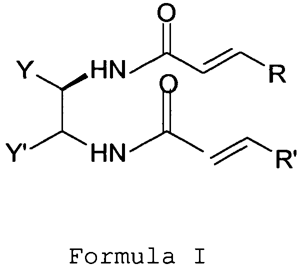 where Y and Y' are identical or different, each representing a phenyl, diphenyl, benzyl group, also substituted, a C₁-C₁₀ linear or branched alkyl group, also substituted, or an aryl-C₁-C₁₀ alkyl group, also substituted, or where Y and Y' together represent a polycondensed aromatic group or a polymethylene ring comprising the chain -(CH₂)n- where n is an integer equal to 2,3,4,5 or 6, and where R and R' are identical or different and represent H or a C₁-C₁₀ linear or branched alkyl group, also substituted, or a phenyl or benzyl group, also substituted.

A second example of monomer is represented by the general formula II, 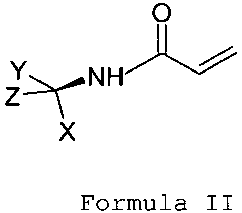 where Y, Z, X, represent independently the one from the other an H, a C₁-C₁₀ linear or branched alkyl group, also substituted, a phenyl, biphenyl, benzyl or aryl-C₁-C₁₀ alkyl group, also substituted, or a molecular radical comprising functional groups or other stereogenic elements.

An additional example of suitable monomer has the general formula III, 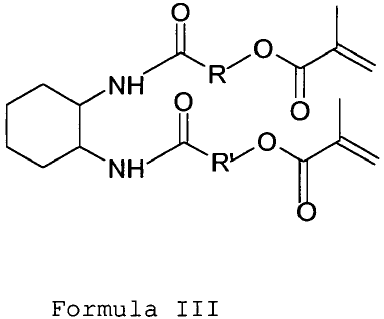 where R and R' are identical or different and represent linear or branched chains of -CH₂-groups alternate to -NH-, -O-, -OCO- groups.

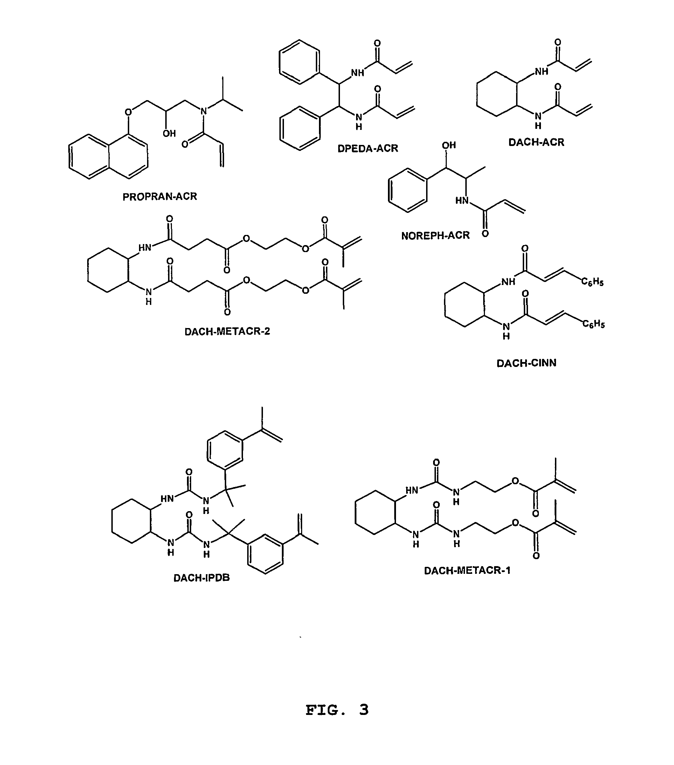

Practical examples of monomeric compounds used for the preparation of matrixes of the invention are: propranolol N-acryloyl (PROPRAN-ACR); 1,2-*trans-*diphenylethylenediamine-di-acryloyl (DPEDA-ACR); 1,2-*trans*-diaminocyclohexane-di-acryloyl (DACH-ACR); norephedrine N-acryloyl (NOREPH-ACR); 1,2-*trans-*diaminocyclohexane-di-2-(metacryloyloxy) ethyl succinate (DACH-METACR-2); cinnamoyl 1,2-*trans*-diaminocyclohexane (DACH-CINN); 1,2-*trans*-diaminecyclohexane-di-(3-isopropenylphenyl)-1-methylethyl ureide (DACH-IPDB); 1,2-*trans*-diaminecyclohexane-di-(2-methylacryloyloxy)-ethyl-ureide (DACH-METACR-1); all reported in Figure 3.

Given the ease of synthesis of the chiral selector, it is possible to prepare relevant amounts (50-100 g) of chiral stationary phase, above all when macroporous silica is used as inert support. The availability of relevant amounts of chiral support enables the use of these stationary phases not merely in analytical HPLC, but also in semi-preparative and preparative processes of racemate resolution and/or of enantiomer purification. To this end, the stationary phase comprising the polymeric selector may be packed in chromatographic columns suitable for analytical or preparative liquid chromatography. In particular, high-efficiency techniques are, e.g., HPLC, SMB, SFC or supercritical fluid chromatography, whereas low-efficiency techniques are open column chromatography or flash chromatography.

The abovedescribed stationary phases provide the following advantageous features:
- ease of preparation of the chiral monomer and of the derivatised support;
- chemical, stereochemical and thermal stability, making them suitable for the employ with organic and aqueous solvents and with supercritical fluids, comprising acid and basic modifiers (CH₃COOH, CF3COOH, Et₃N) and under extreme temperature conditions (of from - 80 °C to +100 °C);

- elevated chromatographic efficiency and elevated permeability, due to the effective passivation of the silica surface and to the formation of a polymeric film having a controlled and regular thickness, making the chromatographic material suitable for the enantiomeric analysis of trace materials;
- wide field of application;
- elevated enantioselectivity (α > 4) toward specific compound classes.

Hereinafter, the invention will be detailed by means of examples reported merely by way of illustration, and not meant to limit its protective scope.

Example 1:

### preparation of 3-aminopropyl silica gel:

10.0 g Daisogel^{®} SP-300-5P silica (particle size: 5 µm; surface area: 115 m²/g; pore diameter: 300 Å; pore volume: 0.93 ml/g), previously dried under reduced pressure (0.1 mbar) at 150°C for 2h (drying loss: 2.5 %), is dispersed in 240 ml toluene. The obtained dispersion is reflux heated to 110°C under mechanical stirring and inert atmosphere (argon), and in 1h 25 ml distilled product are collected. The reaction mixture is let back to room temperature and 5.0 ml (21.5 mmoles) 3-aminopropyl-triethoxysilane are added. The reaction mixture is refluxed for 4h, under mechanical stirring and inert atmosphere (argon). After cooling, the modified silica is isolated by filtration, washed with 200 ml toluene, methanol, dichloromethane fractions and dried under reduced pressure (0.1 mbar) at 60°C to constant weight.

Elementary analysis % C 1.35; % H 0.54; % N 0.48

FT-IR (DRIFT) 3432, 2978, 2935, 1874, 1630, 1095, 954, 802 cm⁻¹.

### Example 2:

### Preparation of N-(2-acryloylamine-(1R,2R)-cyclohexyl)-acrylamide:

12.0 ml diisopropylethylamine (70.06 mmoles) are added to a (1R,2R)-diaminecyclohexane (4.0 g; 35.03 mmoles) solution in 50 ml of a 2.5/1 (v/v) anhydrous chloroform/toluene mixture. To the resulting solution, cooled to 0°C, an acryloyl chloride solution (5.7 ml; 70.06 mmoles) in 100 ml of a 2.5/1 (v/v) anhydrous chloroform/toluene mixture is added, dropwise, in 1h 30 min, under magnetic agitation and inert atmosphere (argon). The reaction mixture is kept at 0°C, under magnetic agitation and inert atmosphere (argon), for 35 min. The white precipitate formed is isolated by filtration, washed with toluene and hexane and dried under reduced pressure (0.1 mbar) at room temperature to constant weight (6.34 g; weight yield: 82 %). Separately, the mother liquors are vacuum evaporated (rotary evaporator at about 250 mbar) and dried to constant weight (11.857 g). The obtained solid is dispersed in 60 ml of the CHCl_{3/}toluene mixture in order to recover additional product; the obtained dispersion is filtered through buchner; the isolated solid is washed with toluene and hexane and is dried under reduced pressure (0.1 mbar) to constant weight (205.2 mg). The reaction course is monitored by TLC (eluent: dichloromethane/methanol 90/10; R_{f} = 0.41).

Elementary analysis: %C 63.31, %H 7.99, %N 12.06. Theoretical for C₁₂H₁₈N₂O₂ % C 64.83, % H 8.16, % N 12.61.

Specific rotatory power [α]_{D}²⁰ = + 85.4° (c = 1.0; DMSO)

¹H-NMR (²H₆DMSO) δ: 1.20-1.30 (m, 4H), 1.60-1.70 (m, 2H), 1.85-1.95 (m, 2H), 3.60-3.70 (m, 2H), 5.52 (dd, *J* = 9.90 Hz, 2.44 Hz, 2H), 6.02 (dd, *J* = 17.09 Hz, 2.44 Hz, 2H), 6.15 (dd, *J* = 17.09 Hz, 9.90 Hz, 2H), 7.85 (d, 2H).

FT-IR (KBr) 3284, 3075, 3033, 1656, 1625, 1550, 1410 cm⁻¹.

### Example 3:

### Preparation of the dichloride of 4,4'-azo-bis-4-cyanovaleric acid:

8.0 g phosphor pentachloride (38.4 mmoles) are dispersed in 40 ml anhydrous dichloromethane, degassed with Helium (dispersion A). 2.0 g 4,4'-azo-bis-4-cyanovaleric acid (9.6 mmoles) are dispersed in 55 ml anhydrous dichloromethane degassed with Helium (dispersion B).

To the dispersion A, put in a three-neck flask under inert atmosphere and magnetic agitation and cooled to 0°C in ice bath, there is added in 55 min the dispersion B, by loading funnel. It is left under magnetic agitation and inert atmosphere (argon), letting the temperature raise to 20°C, for 6h. The solid possibly formed during the reaction is removed by filtration, the reaction mixture is vacuum concentrated (rotary evaporator at about 250 mbar) and the precipitate formed is removed by filtration. The residual liquid is auditioned with hexane (about 20 ml) and stored at low temperature (4°C) for 12h. The hexane is removed from the obtained precipitate by suction; the solid is dried under reduced pressure (0.1 mbar), at room temperature, to constant weight (1.80 g; weight yield: 76.7 %) and stored under inert atmosphere (argon) at low temperature (-20°C).

FT-IR (Nujol) 2240, 1789, 1462 cm⁻¹.

### Example 4:

### Functionalization of the aminopropyl silica gel with the dichloride of 4,4'-azo-bis-(4-cyanovaleric) acid:

3.0 g aminopropyl silica gel are dispersed in 25 ml anhydrous toluene under inert atmosphere (argon) and mechanical stirring. To such dispersion, cooled to 0°C, a 1-metoxy-2-methyl-1-(trimethylsiloxy)-1-propene solution (500 µl; 2.45 mmoles) is added dropwise in 5 ml anhydrous toluene.

A 4,4'-azo-bis-(4-cyanovaleric) acid dichloride solution (336 mg; 1.22 mmoles) is added dropwise to 10 ml anhydrous toluene, under inert atmosphere (argon) and mechanical stirring, at 0°C. The reaction mixture is let back to room temperature and then left 2h 45min under mechanical stirring and inert atmosphere at room temperature.

The modified silica is isolated by filtration, washed with acetone, methanol, acetone, dichloromethane, dried under reduced pressure (0.1 mbar) at room temperature to constant weight and stored under inert atmosphere (argon) at low temperature (4°C).

Elementary analysis % C 3.70, % H 0.78, % N 1.21 DSC *T*_{dec} = 120°C; *I*_{dec} = 96 Jg⁻¹

FT-IR (DRIFT) 2978, 2941, 2898, 2244, 1649, 1548, 1446 cm¹.

### Example 5:

### Preparation of the polymeric chiral stationary phase (FSC 1):

450 mg N-(2-acryloylamine-(1*R*,2*R*)-cyclohexyl)-acrylamide (2.03 mmoles) are dissolved in 50 ml anhydrous chloroform degassed with Helium, at 60°C and under mechanical stirring. 3.0 g silica, derivatized with the 4,4'-azo-bis-(4-cyanovaleric) acid dichloride, are added to the obtained solution. The reaction mixture is kept at 60°C for 5h 10min under mechanical stirring and inert atmosphere (argon) and then refluxed for 1h.

The obtained silica is isolated by filtration, washed with methanol, acetone, dichloromethane and dried under reduced pressure (0.1 mbar) at 60°C to constant weight.

Elementary analysis % C 10.36, % H 1.68, % N 2.19

FT-IR (KBr) 3078, 2941, 2860, 2237, 1646, 1542, 1451 cm⁻¹.

The data reported in Table 1 illustrate the recovery rate of the stationary phase CSP1.

The computations were carried out in the light of the result of elementary analysis for Nitrogen.

**Table 1**

| | Stage I | Stage II | Stage III |
|---|---|---|---|
| % Carbon | 1.35 | 3.70 | 10.36 |
| % Hydrogen | 0.54 | 0.78 | 1.68 |
| % Nitrogen | 0.48 | 1.21 | 2.19 |
| mmoles substrate / g silica | 353.03 | 141.76 | 450.87 |
| moles substrate/ g matrix | 342.61 | 133.07 | 386.86 |
| mmoles substrate / m² | 3.07 | 1.23 | 3.92 |
| Weight increase (%) | 3.04 | 6.53 | 16.55 |
| Average distance among groups (Å) | 7.37 | 11.63 | 6.52 |

### Applicative examples:

In a series of practical applications, the modified silica CSP1, produced according to examples 1 to 5 (scheme reported in figure 2), was packed by slurry technique in steel columns (4.0x250 mm size) and employed in the direct resolution of racemates of a wide range of molecules having central, axial and planar chirality and characterised by the presence of various functional groups (alcohols, acids, amides, heterocyclic compounds).

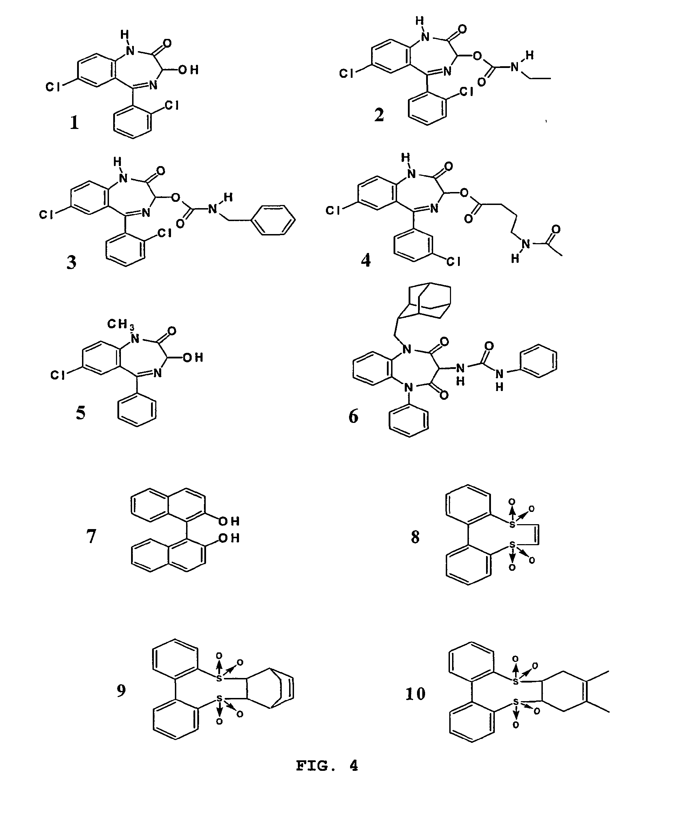

Some chiral substances whose racemates have been resolved are reported in figure 4.

As it is illustrated in Table 2, in all cases individual enantiomers having elevated chemical and stereochemical purity values were obtained.

Chromatographic data:
the values K'₁ and K'₂ relate to the two enantiomers of a same substance.

The value K' (retention factor) is given by the following formula:
(t₁ - t₀) /t₀, where t₁ and t₀ are dilution times of the enantiomer and t₀ is the elution time of an unretained standard compound (1,3,5-tri-t-butylbenzene). α (enantioselectivity factor) indicates the k'₂/k'₁ratio.

**TABLE 2**

| Compound (see scheme 2) | k'₁ | k'₂ | α | Eluent |
|---|---|---|---|---|
| | | | | |
| 1 | 0.13 | 0.20 | 1.58 | CH₂Cl₂/MeOH 97/3 |
| 2 | 0.38 | 0.62 | 1.60 | " " |
| 3 | 1.25 | 1.47 | 1.18 | " " |
| 4 | 1.44 | 6.18 | 4.29 | " " |
| 5 | 1.51 | 5.89 | 3.89 | " " |
| 6 | 5.64 | 11.6 3 | 2.06 | " " |
| 7 | 1.74 | 3.30 | 1.90 | " " |
| 8 | 4.54 | 5.02 | 1.10 | Hexane/CH₂Cl₂ 80/20 + 0.5% MeOH |
| 9 | 2.81 | 3.06 | 1.09 | Hexane/CH₂Cl₂ 80/20 + 0.5% MeOH |
| 10 | 4.67 | 5.12 | 1.10 | Hexane/CH₂Cl₂ 90/10 + 0.5% MeOH |

## Claims

1. A brush type chiral stationary phase for liquid chromatography obtained by:
(a) treating a solid support of macroporous silica with a reagent capable of attaching a functional group to the support,
(b) forming an activated support by immobilizing an activated bifunctional reactant containing an azo group onto the support of (a) while preserving the azo group capability of generating radical species,
(c) reacting the activated support of (b) with chiral monomers selected among N-(meta)acryloyl derivatives of amines, diamines, aminoalcohols, and aminoacids under an inert atmosphere at a temperature sufficiently high to enable the azo group to induce formation of free radicals to polymerize the chiral monomers directly onto the activated support to form a chiral polymer; wherein the chiral monomers are in the form of enantiomers having an elevated enantiomeric excess.

2. A brush type chiral stationary phase according to Claim 1, wherein the chiral monomer is a N-diacryloyl derivative corresponding to Formula I: 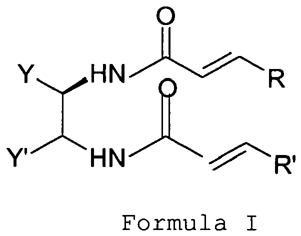 wherein Y and Y', the same or different, are selected among phenyl, diphenyl, optionally substituted benzyl and an optionally substituted C₁-C₁₀ linear or branched alkyl group; or Y and Y' together form a polymethylene ring of formula -(CH₂)ₙ- where n is an integer equal to 2, 3, 4, 5 or 6; and where R and R', the same or different, are selected among H, an optionally substituted C₁-C₁₀ linear or branched alkyl group, phenyl and optionally substituted benzyl.

3. A brush type chiral stationary phase according to Claim 1, wherein the chiral monomer is a N-acryloyl derivative corresponding to Formula II: 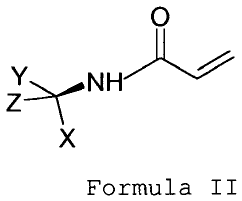 wherein Y, Z and X, the same or different, are selected among H, an optionally substituted C₁-C₁₀ linear or branched alkyl group, phenyl, biphenyl, benzyl, and optionally substituted aryl-C₁-C₁₀ alkyl; or a molecular radical comprising functional groups or other stereogenic elements.

4. A brush type chiral stationary phase according to Claim 1, wherein the chiral monomer is a N-acryloyl derivative corresponding to Formula III: 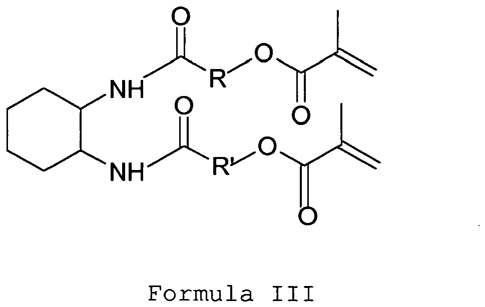 wherein R and R¹, the same or different, are a linear chain of -CH₂- groups alternate to -NH-, -O-, -OCO-groups.

5. A brush type chiral stationary phase according to Claim 1, wherein the chiral monomer is selected among propranolol N-acryloyl, 1,2-trans-diphenyl-ethylenediamine-di-acryloyl, 1,2-trans-diamino-cyclohexane-di-acryloyl, norephedrine N-acryloyl, 1,2-*trans*-diaminocyclohexane-di-2-(metacryloyloxy)-ethyl succinate, cinnamoyl 1,2-*trans*-diaminocyclohexane, 1,2-*trans*-diaminocyclohexane-di-(3-isopropenylphenyl)-1-methylethyl ureide and 1,2-*trans*-diaminocyclohexane-di-(2-methylacryloyl oxy)-ethyl-ureide.

6. A brush type chiral stationary phase according to Claim 1, wherein the activated bifunctional reactant containing an azo group is an activated form of an α,α'-azo-bis-(cyanocarboxylic) acid.

7. A brush type chiral stationary phase according to Claim 6, wherein the activated bifunctional reactant containing an azo group is an activated form of 4,4'-azo-bis-(4-cyanovaleric) acid or 4,4'-azo-bis-(4-cyanobutanoic) acid.

8. A brush type chiral stationary phase according to Claim 7, wherein the activated form is the anhydride or the dichloride of the 4,4'-azo-bis-(4-cyanovaleric) acid or 4,4'-azo-bis-(4-cyanobutanoic) acid.

9. A brush type chiral stationary phase according to Claim 1, wherein the functional group attached to the support is selected among -NH₂, -OH and -SH.

10. A brush type chiral stationary phase according to Claim 9, wherein the reagent capable of attaching a functional group to the support is a 3-aminopropyl-trialkoxy silane.

11. A brush type chiral stationary phase according to Claim 10, wherein the 3-aminopropyl-trialkoxy silane is 3-aminopropyl-triethoxy silane.

12. A brush type chiral stationary phase according to Claim 1, wherein the macroporous silica is treated with 3-aminopropyl-triethoxy silane.

13. A brush type chiral stationary phase according to Claim 1, wherein the chiral polymer formed bears side residues that are regularly oriented and perpendicular to the polymer structure and to the solid support to which the chiral polymer is covalently bound.

14. A method of preparing a brush type chiral stationary phase for liquid chromatography, the method comprising:
(a) treating a solid support of macroporous silica with a reagent capable of attaching a functional group to the support,
(b) forming an activated support by immobilizing an activated bifunctional reactant containing an azo group onto the support of (a) while preserving the azo group capability of generating radical species,
(c) reacting the activated support of (b) with chiral monomers selected among N-(meta)acryloyl derivatives of amines, diamines, aminoalcohols, and aminoacids under an inert atmosphere at a temperature sufficiently high to enable the azo group to induce formation of free radicals to polymerize the chiral monomers directly onto the activated support to form a chiral polymer; wherein the chiral monomers are in the form of enantiomers having an elevated enantiomeric excess.

15. A method according to Claim 14, wherein the chiral monomer is a N-diacryloyl derivative corresponding to Formula I: 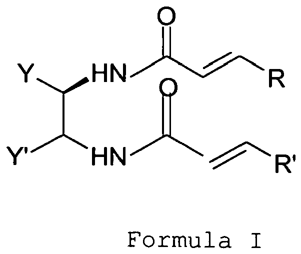 wherein Y and Y', the same or different, are selected among phenyl, diphenyl, optionally substituted benzyl and an optionally substituted C₁-C₁₀ linear or branched alkyl group; or Y and Y' together form a polymethylene ring of formula -(CH₂)ₙ- where n is an integer equal to 2, 3, 4, 5 or 6; and where R and R', the same or different, are selected among H, an optionally substituted C₁-C₁₀ linear or branched alkyl group, phenyl and optionally substituted benzyl.

16. A method according to Claim 14, wherein the chiral monomer is a N-acryloyl derivative corresponding to Formula II: 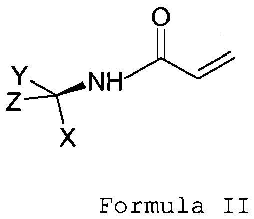 wherein Y, Z and X, the same or different, are selected among H, an optionally substituted C₁-C₁₀ linear or branched alkyl group, phenyl, biphenyl, benzyl, and optionally substituted aryl-C₁-C₁₀ alkyl; or a molecular radical comprising functional groups or other stereogenic elements.

17. A method according to Claim 14, wherein the chiral monomer is a N-acryloyl derivative corresponding to Formula III: 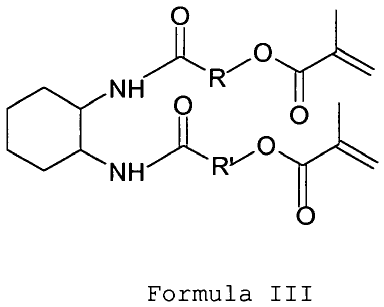 wherein R and R', the same or different, are a linear chain of -CH₂- groups alternate to -NH-, -O-, -OCO-groups.

18. A method according to Claim 14, wherein the chiral monomer is selected among propranolol N-acryloyl, 1,2-*trans*-diphenylethylenediamine-di-acryloyl, 1,2-*trans*-diaminocyclohexane-di-acryloyl, norephedrine N-acryloyl, 1,2-*trans*-diamino-cyclohexane-di-2-(metacryloyloxy)ethyl succinate, cinnamoyl 1,2-*trans*-diaminocyclohexane, 1,2-*trans-*diaminocyclohexane-di-(3-isopropenylphenyl)-1-methyl-ethyl ureide and 1,2-*trans*-diaminocyclohexane-di-(2-methylacryloyl oxy)-ethyl-ureide.

19. A method according to Claim 14, wherein the activated bifunctional reactant containing an azo group is an activated form of an α,α'-azo-bis-(cyanocarboxylic) acid.

20. A method according to Claim 19, wherein the activated bifunctional reactant containing an azo group is an activated form of 4,4'-azo-bis-(4-cyanovaleric) acid or 4,4'-azo-bis-(4-cyanobutanoic) acid.

21. A method according to Claim 20, wherein the activated form is the anhydride or the dichloride of the 4,4'-azo-bis-(4-cyanovaleric) acid or 4,4'-azo-bis-(4-cyanobutanoic) acid.

22. A method according to Claim 14, wherein the functional group attached to the support is selected among -NH₂, -OH and -SH.

23. A method according to Claim 22, wherein the reagent capable of attaching a functional group to the support is a 3-aminopropyl-trialkoxy silane.

24. A method according to Claim 23, wherein the 3-aminopropyl-trialkoxy silane is 3-aminopropyl-triethoxy silane.

25. A method according to Claim 14, wherein the macroporous silica is treated with 3-aminopropyl-triethoxy silane.

26. A method according to Claim 14, wherein the chiral polymer formed bears side residues that are regularly oriented and perpendicular to the polymer structure and to the solid support to which the chiral polymer is covalently bound.

27. A chromatographic column for the resolution of racemic mixtures or the purification of individual enantiomers comprising a brush type chiral stationary phase obtained by:
(a) treating a solid support of macroporous silica with a reagent capable of attaching a functional group to the support,
(b) forming an activated support by immobilizing an activated bifunctional reactant containing an azo group onto the support of (a) while preserving the azo group capability of generating radical species,
(c) reacting the activated support of (b) with chiral monomers selected among N-(meta)acryloyl derivatives of amines, diamines, aminoalcohols, and aminoacids under an inert atmosphere at a temperature sufficiently high to enable the azo group to induce formation of free radicals to polymerize the chiral monomers directly onto the activated support to form a chiral polymer; wherein the chiral monomers are in the form of enantiomers having an elevated enantiomeric excess.

28. A chromatographic column according to Claim 27, wherein the chiral monomer is a N-diacryloyl derivative corresponding to Formula I: 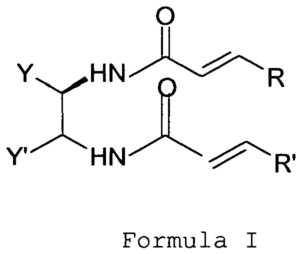 wherein Y and Y', the same or different, are selected among phenyl, diphenyl, optionally substituted benzyl and an optionally substituted C₁-C₁₀ linear or branched alkyl group; or Y and Y' together form a polymethylene ring of formula -(CH₂)ₙ- where n is an integer equal to 2, 3, 4, 5 or 6; and where R and R', the same or different, are selected among H, an optionally substituted C₁-C₁₀ linear or branched alkyl group, phenyl and optionally substituted benzyl.

29. A chromatographic column according to Claim 27, wherein the chiral monomer is a N-acryloyl derivative corresponding to Formula II: 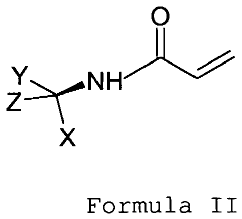 wherein Y, Z and X, the same or different, are selected among H, an optionally substituted C₁-C₁₀ linear or branched alkyl group, phenyl, biphenyl, benzyl, and optionally substituted aryl-C₁-C₁₀ alkyl; or a molecular radical comprising functional groups or other stereogenic elements.

30. A chromatographic column according to Claim 27, wherein the chiral monomer is a N-acryloyl derivative corresponding to Formula III: 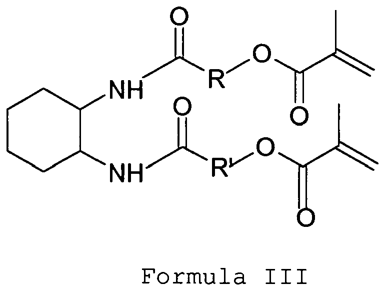 wherein R and R', the same or different, are a linear chain of -CH₂- groups alternate to -NH-, -O-, -OCO-groups.

31. A chromatographic column according to Claim 27, wherein the chiral monomer is selected among propranolol N-acryloyl, 1,2-*trans*-diphenyl-ethylenediamine-di-acryloyl, 1,2-*trans*-diamino-cyclohexane-di-acryloyl, norephedrine N-acryloyl, 1,2-*trans*-diaminocyclohexane-di-2-(metacryloyloxy)-ethyl succinate, cinnamoyl 1,2-*trans*-diamino-cyclohexane, 1,2-*trans*-diaminocyclohexane-di-(3-isopropenylphenyl)-1-methylethyl ureide and 1,2-*trans*-diaminocyclohexane-di-(2-methylacryloyl oxy)-ethyl-ureide.

32. A chromatographic column according to Claim 27, wherein the activated bifunctional reactant containing an azo group is an activated form of an α,α'-azo-bis-(cyanocarboxylic) acid.

33. A chromatographic column according to Claim 32, wherein the activated bifunctional reactant containing an azo group is an activated form of 4,4'-azo-bis-(4-cyanovaleric) acid or 4,4'-azo-bis-(4-cyanobutanoic) acid.

34. A chromatographic column according to Claim 33, wherein the activated form is the anhydride or the dichloride of the 4,4'-azo-bis-(4-cyanovaleric) acid or 4,4'-azo-bis-(4-cyanobutanoic) acid.

35. A chromatographic column according to Claim 27, wherein the functional group attached to the support is selected among -NH₂, -OH and -SH.

36. A chromatographic column according to Claim 35, wherein the reagent capable of attaching a functional group to the support is a 3-aminopropyl-trialkoxy silane.

37. A chromatographic column according to Claim 36, wherein the 3-aminopropyl-trialkoxy silane is 3-aminopropyl-triethoxy silane.

38. A chromatographic column according to Claim 27, wherein the macroporous silica is treated with 3-aminopropyl-triethoxy silane.

39. A chromatographic column according to Claim 27, wherein the chiral polymer formed bears side residues that are regularly oriented and perpendicular to the polymer structure and to the solid support to which the chiral polymer is covalently bound.

40. Use of a chromatographic column according to Claim 27 for high- or low-efficiency analytical or preparative separation processes.

41. Use according to Claim 40 for HPLC, SMB, SFC or supercritical fluid chromatography.

42. A chromatographic method for the resolution of a racemic mixture or the purification of individual enantiomers comprising using a brush type chiral stationary phase obtained by:
(a) treating a solid support of macroporous silica with a reagent capable of attaching a functional group to the support,
(b) forming an activated support by immobilizing an activated bifunctional reactant containing an azo group onto the support of (a) while preserving the azo group capability of generating radical species,
(c) reacting the activated support of (b) with chiral monomers selected among N-(meta)acryloyl derivatives of amines, diamines, aminoalcohols, and aminoacids under an inert atmosphere at a temperature sufficiently high to enable the azo group to induce formation of free radicals to polymerize the chiral monomers directly onto the activated support to form a chiral polymer; wherein the chiral monomers are in the form of enantiomers having an elevated enantiomeric excess.

43. A chromatographic method according to Claim 42, wherein the chiral monomer is a N-diacryloyl derivative corresponding to Formula I: 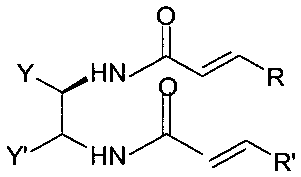 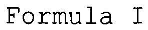 wherein Y and Y', the same or different, are selected among phenyl, diphenyl, optionally substituted benzyl and an optionally substituted C₁-C₁₀ linear or branched alkyl group; or Y and Y' together form a polymethylene ring of formula -(CH₂)ₙ- where n is an integer equal to 2, 3, 4, 5 or 6; and where R and R', the same or different, are selected among H, an optionally substituted C₁-C₁₀ linear or branched alkyl group, phenyl and optionally substituted benzyl.

44. A chromatographic method according to Claim 42, wherein the chiral monomer is a N-acryloyl derivative corresponding to Formula II: 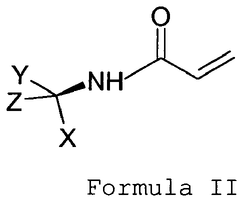 wherein Y, Z and X, the same or different, are selected among H, an optionally substituted C₁-C₁₀ linear or branched alkyl group, phenyl, biphenyl, benzyl, and optionally substituted aryl-C₁-C₁₀ alkyl; or a molecular radical comprising functional groups or other stereogenic elements.

45. A chromatographic method according to Claim 42, wherein the chiral monomer is a N-acryloyl derivative corresponding to Formula III: 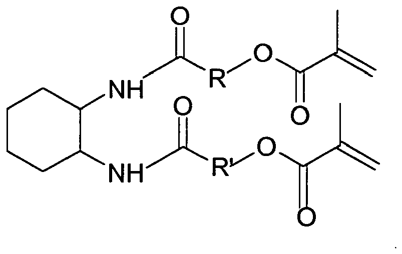 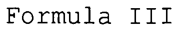 wherein R and R¹, the same or different, are a linear chain of -CH₂- groups alternate to -NH-, -O-, -OCO-groups.

46. A chromatographic method according to Claim 42, wherein the chiral monomer is selected among propranolol N-acryloyl, 1,2-*trans*-diphenyl-ethylenediamine-di-acryloyl, 1,2-*trans*-diamino-cyclohexane-di-acryloyl, norephedrine N-acryloyl, 1,2-*trans*-diaminocyclohexane-di-2-(metacryloyloxy)-ethyl succinate, cinnamoyl 1,2-*trans*-diamino-cyclohexane, 1,2-*trans*-diaminocyclohexane-di-(3-isopropenylphenyl)-1-methylethyl ureide and 1,2-*trans*-diaminocyclohexane-di-(2-methylacryloyl oxy)-ethyl-ureide.

47. A chromatographic method according to Claim 42, wherein the activated bifunctional reactant containing an azo group is an activated form of an α,α'-azo-bis-(cyanocarboxylic) acid.

48. A chromatographic method according to Claim 57, wherein the activated bifunctional reactant containing an azo group is an activated form of 4,4'-azo-bis-(4-cyanovaleric) acid or 4,4'-azo-bis-(4-cyanobutanoic) acid.

49. A chromatographic method according to Claim 48, wherein the activated form is the anhydride or the dichloride of the 4,4'-azo-bis-(4-cyanovaleric) acid or 4,4'-azo-bis-(4-cyanobutanoic) acid.

50. A chromatographic method according to Claim 42, wherein the functional group attached to the support is selected among -NH₂, -OH and -SH.

51. A chromatographic method according to Claim 50, wherein the reagent capable of attaching a functional group to the support is a 3-aminopropyl-trialkoxy silane.

52. A chromatographic method according to Claim 51, wherein the 3-aminopropyl-trialkoxy silane is 3-aminopropyl-triethoxy silane.

53. A chromatographic method according to Claim 42, wherein the macroporous silica is treated with 3-aminopropyl-triethoxy silane.

54. A chromatographic method according to Claim 42, wherein the chiral polymer formed bears side residues that are regularly oriented and perpendicular to the polymer structure and to the solid support to which the chiral polymer is covalently bound.

55. A chromatographic method according to Claim 42, wherein the racemic mixture or enantiomers comprise a compound having central, axial or planar chirality.

56. A chromatographic method according to Claim 55, wherein the compound is any one of compounds 1 to 10 having the following formulas:

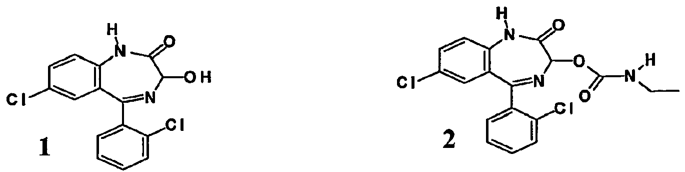

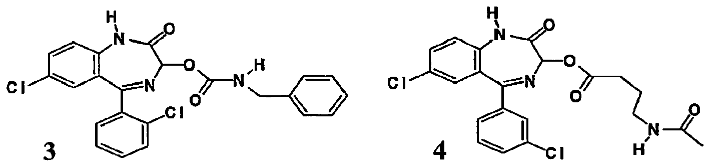

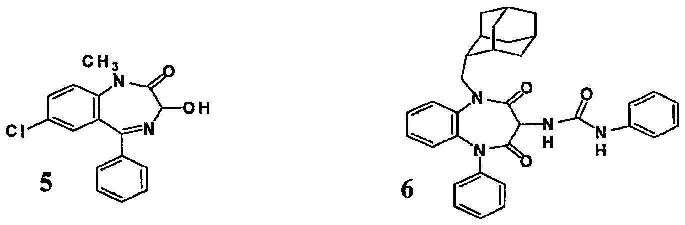

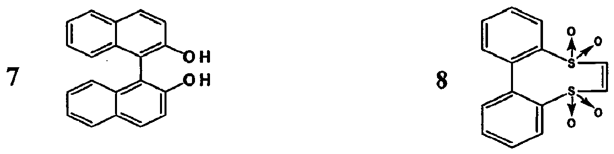

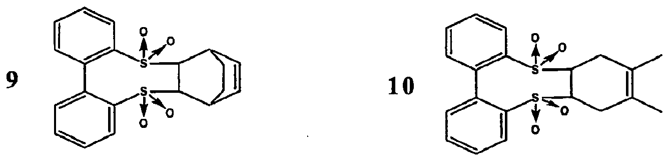

## Patentansprüche

1. Chirale stationäre Phase vom Bürstentyp zur Flüssigchromatographie, erhalten durch:
(a) Behandeln eines festen Trägers aus makroporöser Kieselerde mit einem Reagens, das imstande ist, eine funktionelle Gruppe an den Träger anzuheften,
(b) Bilden eines aktivierten Trägers durch Immobilisieren eines aktivierten, bifunktionellen Reaktionspartners, der eine Azo-Gruppe enthält, am Träger von (a), während die Fähigkeit der Azo-Gruppe bewahrt wird, radikale Spezies zu erzeugen,
(c) Umsetzen des aktivierten Trägers von (b) mit chiralen Monomeren, die ausgewählt sind aus N-(Meta)Acryloylderivaten von Aminen, Diaminen, Aminoalkoholen und Aminosäuren, unter einer Schutzatmosphäre bei einer Temperatur, die ausreichend hoch ist, um der Azo-Gruppe zu ermöglichen, eine Bildung freier Radikale einzuleiten, um die chiralen Monomere direkt am aktivierten Träger zu polymerisieren, um ein chirales Polymer zu bilden; wobei die chiralen Monomere die Form von Enantiomeren mit einem erhöhten enantiomeren Überschuss aufweisen.

2. Chirale stationäre Phase vom Bürstentyp nach Anspruch 1, wobei das chirale Monomer ein N-Diacryloylderivat entsprechend der Formel I ist: 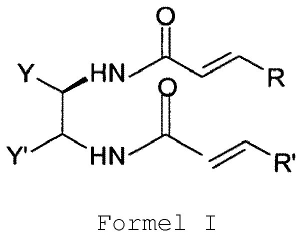 wobei Y und Y', welche dieselben oder unterschiedlich sind, ausgewählt sind aus Phenyl, Diphenyl, optional substituiertem Benzyl und einer optional substituierten, linearen, oder verzweigten C₁-C₁₀-Alkylgruppe; oder Y und Y' gemeinsam einen Polymethylenring der Formel -(CH₂)ₙ- bilden, wobei n eine ganze Zahl gleich 2, 3, 4, 5 oder 6 ist; und wobei R und R', welche dieselben oder unterschiedlich sind, ausgewählt sind aus H, einer optional substituierten, linearen, oder verzweigten C₁-C₁₀-Alkylgruppe, Phenyl und optional substituiertem Benzyl.

3. Chirale stationäre Phase vom Bürstentyp nach Anspruch 1, wobei das chirale Monomer ein N-Acryloylderivat entsprechend der Formel II ist: 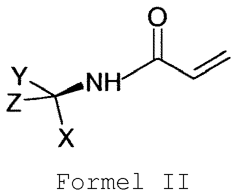 wobei Y, Z und X, welche dieselben oder unterschiedlich sind, ausgewählt sind aus H, einer optional substituierten, linearen, oder verzweigten C₁-C₁₀-Alkylgruppe, Phenyl, Biphenyl, Benzyl und optional substituiertem Aryl-C₁-C₁₀-Alkyl; oder ein molekulares Radikal, das funktionelle Gruppen oder andere stereogene Elemente umfasst.

4. Chirale stationäre Phase vom Bürstentyp nach Anspruch 1, wobei das chirale Monomer ein N-Acryloylderivat entsprechend der Formel III ist: 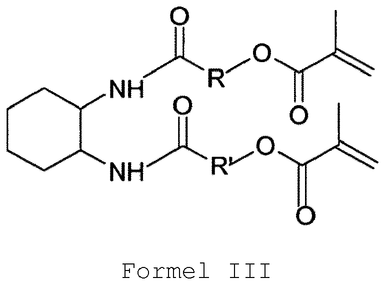 wobei R und R', welche dieselben oder unterschiedlich sind, eine lineare Kette von -CH₂- Gruppen alternierend zu -NH-, -0-, -OCO- Gruppen sind.

5. Chirale stationäre Phase vom Bürstentyp nach Anspruch 1, wobei das chirale Monomer ausgewählt ist aus Propanolol-N-acryloyl, 1,2-trans-Diphenylethylendiamin-di-acryloyl, 1,2-trans-Diaminocyclohexan-di-acryloyl, Norephedrin-N-acryloyl, 1,2-trans-Diaminocyclohexan-di-2-(metacryloyloxy)-ethylsuccinat, Cinnamoyl-1,2-trans-Diaminocyclohexan, 1,2-trans-Diaminocyclohexan-di-(3-Isopropylphenyl)-1-methylethyl-ureid und 1,2-trans-Diaminocyclohexan-di-(2-methylacryloyl-oxy)-ethyl-ureid.

6. Chirale stationäre Phase vom Bürstentyp nach Anspruch 1, wobei der aktivierte, bifunktionelle Reaktionspartner, der eine Azo-Gruppe enthält, eine aktivierte Form einer α,α'-Azo-bis-(cyanocarbon)säure ist.

7. Chirale stationäre Phase vom Bürstentyp nach Anspruch 6, wobei der aktivierte, bifunktionelle Reaktionspartner, der eine Azo-Gruppe enthält, eine aktivierte Form einer 4,4'-Azo-bis-(4-cyanovalerian)säure oder 4,4'-Azo-bis-(4-cyanobutan)säure ist.

8. Chirale stationäre Phase vom Bürstentyp nach Anspruch 7, wobei die aktivierte Form der Anhydrid oder das Dichlorid der 4,4'-Azo-bis-(4-cyanovalerian)säure oder 4,4'-Azo-bis-(4-cyanobutan)säure ist.

9. Chirale stationäre Phase vom Bürstentyp nach Anspruch 1, wobei die funktionelle Gruppe, die an den Träger angeheftet ist, ausgewählt ist aus -NH₂, -OH und -SH.

10. Chirale stationäre Phase vom Bürstentyp nach Anspruch 9, wobei das Reagens, das zum Anheften einer funktionellen Gruppe an den Träger imstande ist, ein 3-Aminopropyl-trialkoxysilan ist.

11. Chirale stationäre Phase vom Bürstentyp nach Anspruch 10, wobei das 3-Aminopropyl-trialkoxysilan 3-Aminopropyl-triethoxysilan ist.

12. Chirale stationäre Phase vom Bürstentyp nach Anspruch 1, wobei die makroporöse Kieselerde mit 3-Aminopropyl-triethoxysilan behandelt ist.

13. Chirale stationäre Phase vom Bürstentyp nach Anspruch 1, wobei das gebildete chirale Polymer Seitenreste trägt, die regelmäßig orientiert und senkrecht zur Polymerstruktur und zum festen Träger sind, an den das chirale Polymer kovalent gebunden ist.

14. Verfahren zum Herstellen einer chiralen stationären Phase vom Bürstentyp zur Flüssigchromatographie, wobei das Verfahren umfasst:
(a) Behandeln eines festen Trägers aus makroporöser Kieselerde mit einem Reagens, das imstande ist, eine funktionelle Gruppe an den Träger anzuheften,
(b) Bilden eines aktivierten Trägers durch Immobilisieren eines aktivierten, bifunktionellen Reaktionspartners, der eine Azo-Gruppe enthält, am Träger von (a), während die Fähigkeit der Azo-Gruppe bewahrt wird, radikale Spezies zu erzeugen,
(c) Umsetzen des aktivierten Trägers von (b) mit chiralen Monomeren, die ausgewählt sind aus N-(Meta)Acryloylderivaten von Aminen, Diaminen, Aminoalkoholen und Aminosäuren, unter einer Schutzatmosphäre bei einer Temperatur, die ausreichend hoch ist, um der Azo-Gruppe zu ermöglichen, eine Bildung freier Radikale einzuleiten, um die chiralen Monomere direkt am aktivierten Träger zu polymerisieren, um ein chirales Polymer zu bilden; wobei die chiralen Monomere die Form von Enantiomeren mit einem erhöhten enantiomeren Überschuss aufweisen.

15. Verfahren nach Anspruch 14, wobei das chirale Monomer ein N-Diacryloylderivat entsprechend der Formel I ist: 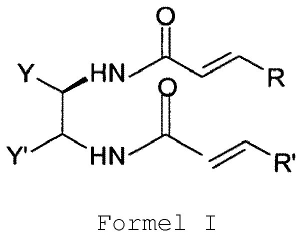 wobei Y und Y', welche dieselben oder unterschiedlich sind, ausgewählt sind aus Phenyl, Diphenyl, optional substituiertem Benzyl und einer optional substituierten, linearen, oder verzweigten C₁-C₁₀-Alkylgruppe; oder Y und Y' gemeinsam einen Polymethylenring der Formel -(CH₂)ₙ- bilden, wobei n eine ganze Zahl gleich 2, 3, 4, 5 oder 6 ist; und wobei R und R', welche dieselben oder unterschiedlich sind, ausgewählt sind aus H, einer optional substituierten, linearen, oder verzweigten C₁-C₁₀-Alkylgruppe, Phenyl und optional substituiertem Benzyl.

16. Verfahren nach Anspruch 14, wobei das chirale Monomer ein N-Acryloylderivat entsprechend der Formel II ist: 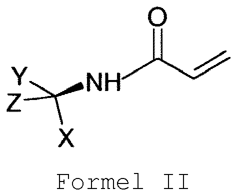 wobei Y, Z und X, welche dieselben oder unterschiedlich sind, ausgewählt sind aus H, einer optional substituierten, linearen, oder verzweigten C₁-C₁₀-Alkylgruppe, Phenyl, Biphenyl, Benzyl und optional substituiertem Aryl-C₁-C₁₀-Alkyl; oder ein molekulares Radikal, das funktionelle Gruppen oder andere stereogene Elemente umfasst.

17. Verfahren nach Anspruch 14, wobei das chirale Monomer ein N-Acryloylderivat entsprechend der Formel III ist: 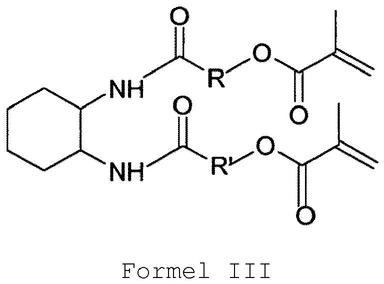 wobei R und R', welche dieselben oder unterschiedlich sind, eine lineare Kette von -CH₂- Gruppen alternierend zu -NH-, -O-, -OCO- Gruppen sind.

18. Verfahren nach Anspruch 14, wobei das chirale Monomer ausgewählt ist aus Propanolol-N-acryloyl, 1,2-trans-Diphenyl-ethylendiamin-di-acryloyl, 1,2-trans-Diaminocyclohexan-di-acryloyl, Norephedrin-N-acryloyl, 1,2-trans-Diaminocyclohexan-di-2-(metacryloyloxy)-ethylsuccinat, Cinnamoyl-1,2-trans-Diaminocyclohexan, 1,2-trans-Diaminocyclohexan-di-(3-Isopropylphenyl)-1-methylethyl-ureid und 1,2-trans-Diaminocyclohexan-di-(2-methylacryloyl-oxy)-ethyl-ureid.

19. Verfahren nach Anspruch 14, wobei der aktivierte, bifunktionelle Reaktionspartner, der eine Azo-Gruppe enthält, eine aktivierte Form einer α,α'-Azo-bis-(cyanocarbon)säure ist.

20. Verfahren nach Anspruch 19, wobei der aktivierte, bifunktionelle Reaktionspartner, der eine Azo-Gruppe enthält, eine aktivierte Form einer 4,4'-Azo-bis-(4-cyanovalerian)säure oder 4,4'-Azo-bis-(4-cyanobutan)säure ist.

21. Verfahren nach Anspruch 20, wobei die aktivierte Form der Anhydrid oder das Dichlorid der 4,4'-Azo-bis-(4-cyanovalerian)säure oder 4,4'-Azo-bis-(4-cyanobutan)säure ist.

22. Verfahren nach Anspruch 14, wobei die funktionelle Gruppe, die an den Träger angeheftet ist, ausgewählt ist aus -NH₂, -OH und -SH.

23. Verfahren nach Anspruch 22, wobei das Reagens, das zum Anheften einer funktionellen Gruppe an den Träger imstande ist, ein 3-Aminopropyl-trialkoxysilan ist.

24. Verfahren nach Anspruch 23, wobei das 3-Aminopropyl-trialkoxysilan 3-Aminopropyl-triethoxysilan ist.

25. Verfahren nach Anspruch 14, wobei die makroporöse Kieselerde mit 3-Aminopropyl-triethoxysilan behandelt ist.

26. Verfahren nach Anspruch 14, wobei das gebildete chirale Polymer Seitenreste trägt, die regelmäßig orientiert und senkrecht zur Polymerstruktur und zum festen Träger sind, an den das chirale Polymer kovalent gebunden ist.

27. Chromatographiesäule für die Auflösung racemischer Gemische oder die Reinigung einzelner Enantionmere, umfassend eine chirale stationäre Phase vom Bürstentyp, erhalten durch:
(a) Behandeln eines festen Trägers aus makroporöser Kieselerde mit einem Reagens, das imstande ist, eine funktionelle Gruppe an den Träger anzuheften,
(b) Bilden eines aktivierten Trägers durch Immobilisieren eines aktivierten, bifunktionellen Reaktionspartners, der eine Azo-Gruppe enthält, am Träger von (a), während die Fähigkeit der Azo-Gruppe bewahrt wird, radikale Spezies zu erzeugen,
(c) Umsetzen des aktivierten Trägers von (b) mit chiralen Monomeren, die ausgewählt sind aus N-(Meta)Acryloylderivaten von Aminen, Diaminen, Aminoalkoholen und Aminosäuren, unter einer Schutzatmosphäre bei einer Temperatur, die ausreichend hoch ist, um der Azo-Gruppe zu ermöglichen, eine Bildung freier Radikale einzuleiten, um die chiralen Monomere direkt am aktivierten Träger zu polymerisieren, um ein chirales Polymer zu bilden; wobei die chiralen Monomere die Form von Enantiomeren mit einem erhöhten enantiomeren Überschuss aufweisen.

28. Chromatographiesäule nach Anspruch 27, wobei das chirale Monomer ein N-Diacryloylderivat entsprechend der Formel I ist: 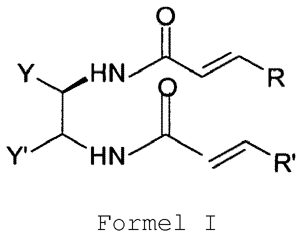 wobei Y und Y', welche dieselben oder unterschiedlich sind, ausgewählt sind aus Phenyl, Diphenyl, optional substituiertem Benzyl und einer optional substituierten, linearen, oder verzweigten C₁-C₁₀-Alkylgruppe; oder Y und Y' gemeinsam einen Polymethylenring der Formel - (CH₂)ₙ- bilden, wobei n eine ganze Zahl gleich 2, 3, 4, 5 oder 6 ist; und wobei R und R', welche dieselben oder unterschiedlich sind, ausgewählt sind aus H, einer optional substituierten, linearen, oder verzweigten C₁-C₁₀-Alkylgruppe, Phenyl und optional substituiertem Benzyl.

29. Chromatographiesäule nach Anspruch 27, wobei das chirale Monomer ein N-Acryloylderivat entsprechend der Formel II ist: 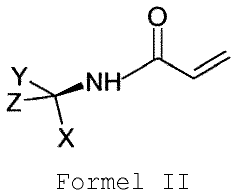 wobei Y, Z und X, welche dieselben oder unterschiedlich sind, ausgewählt sind aus H, einer optional substituierten, linearen, oder verzweigten C₁-C₁₀-Alkylgruppe, Phenyl, Biphenyl, Benzyl und optional substituiertem Aryl-C₁-C₁₀-Alkyl; oder ein molekulares Radikal, das funktionelle Gruppen oder andere stereogene Elemente umfasst.

30. Chromatographiesäule nach Anspruch 27, wobei das chirale Monomer ein N-Acryloylderivat entsprechend der Formel III ist: 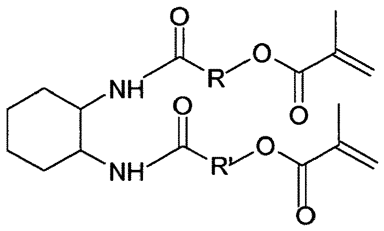 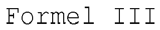 wobei R und R', welche dieselben oder unterschiedlich sind, eine lineare Kette von -CH₂- Gruppen alternierend zu -NH-, -0-, -OCO- Gruppen sind.

31. Chromatographiesäule nach Anspruch 27, wobei das chirale Monomer ausgewählt ist aus Propanolol-N-acryloyl, 1,2-trans-Diphenyl-ethylendiamin-di-acryloyl, 1,2-trans-Diaminocyclohexan-di-acryloyl, Norephedrin-N-acryloyl, 1,2-trans-Diaminocyclohexan-di-2-(metacryloyloxy)-ethylsuccinat, Cinnamoyl-1,2-trans-Diaminocyclohexan, 1,2-trans-Diaminocyclohexan-di-(3-Isopropylphenyl)-1-methylethyl-ureid und 1,2-trans-Diaminocyclohexan-di-(2-methylacryloyl-oxy)-ethyl-ureid.

32. Chromatographiesäule nach Anspruch 27, wobei der aktivierte, bifunktionelle Reaktionspartner, der eine Azo-Gruppe enthält, eine aktivierte Form einer α,α'-Azo-bis-(cyanocarbon)säure ist.

33. Chromatographiesäule nach Anspruch 32, wobei der aktivierte, bifunktionelle Reaktionspartner, der eine Azo-Gruppe enthält, eine aktivierte Form einer 4,4'-Azo-bis-(4-cyanovalerian)säure oder 4,4'-Azo-bis-(4-cyanobutan)säure ist.

34. Chromatographiesäule nach Anspruch 33, wobei die aktivierte Form der Anhydrid oder das Dichlorid der 4,4'-Azo-bis-(4-cyanovalerian)säure oder 4,4'-Azo-bis-(4-cyanobutan)säure ist.

35. Chromatographiesäule nach Anspruch 27, wobei die funktionelle Gruppe, die an den Träger angeheftet ist, ausgewählt ist aus -NH₂, -OH und -SH.

36. Chromatographiesäule nach Anspruch 35, wobei das Reagens, das zum Anheften einer funktionellen Gruppe an den Träger imstande ist, ein 3-Aminopropyl-trialkoxysilan ist.

37. Chromatographiesäule nach Anspruch 36, wobei das 3-Aminopropyl-trialkoxysilan 3-Aminopropyl-triethoxysilan ist.

38. Chromatographiesäule nach Anspruch 27, wobei die makroporöse Kieselerde mit 3-Aminopropyl-triethoxysilan behandelt ist.

39. Chromatographiesäule nach Anspruch 27, wobei das gebildete chirale Polymer Seitenreste trägt, die regelmäßig orientiert und senkrecht zur Polymerstruktur und zum festen Träger sind, an den das chirale Polymer kovalent gebunden ist.

40. Verwendung einer Chromatographiesäule nach Anspruch 27 für hoch- oder niedereffiziente analytische oder präparative Trennungsprozesse.

41. Verwendung nach Anspruch 40 für HPLC, SMB, SFC oder superkritische Fluidchromatographie.

42. Chromatographisches Verfahren für die Auflösung racemischer Gemische oder die Reinigung einzelner Enantionmere, umfassend eine chirale stationäre Phase vom Bürstentyp, erhalten durch:
(a) Behandeln eines festen Trägers aus makroporöser Kieselerde mit einem Reagens, das imstande ist, eine funktionelle Gruppe an den Träger anzuheften,
(b) Bilden eines aktivierten Trägers durch Immobilisieren eines aktivierten, bifunktionellen Reaktionspartners, der eine Azo-Gruppe enthält, am Träger von (a), während die Fähigkeit der Azo-Gruppe bewahrt wird, radikale Spezies zu erzeugen,
(c) Umsetzen des aktivierten Trägers von (b) mit chiralen Monomeren, die ausgewählt sind aus N-(Meta)Acryloylderivaten von Aminen, Diaminen, Aminoalkoholen und Aminosäuren, unter einer Schutzatmosphäre bei einer Temperatur, die ausreichend hoch ist, um der Azo-Gruppe zu ermöglichen, eine Bildung freier Radikale einzuleiten, um die chiralen Monomere direkt am aktivierten Träger zu polymerisieren, um ein chirales Polymer zu bilden; wobei die chiralen Monomere die Form von Enantiomeren mit einem erhöhten enantiomeren Überschuss aufweisen.

43. Chromatographisches Verfahren nach Anspruch 42, wobei das chirale Monomer ein N-Diacryloylderivat entsprechend der Formel I ist: 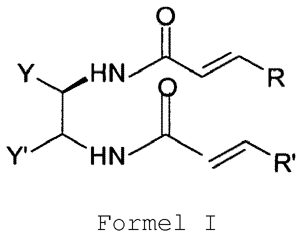 wobei Y und Y', welche dieselben oder unterschiedlich sind, ausgewählt sind aus Phenyl, Diphenyl, optional substituiertem Benzyl und einer optional substituierten, linearen, oder verzweigten C₁-C₁₀-Alkylgruppe; oder Y und Y' gemeinsam einen Polymethylenring der Formel -(CH₂)ₙ- bilden, wobei n eine ganze Zahl gleich 2, 3, 4, 5 oder 6 ist; und wobei R und R', welche dieselben oder unterschiedlich sind, ausgewählt sind aus H, einer optional substituierten, linearen, oder verzweigten C₁-C₁₀-Alkylgruppe, Phenyl und optional substituiertem Benzyl.

44. Chromatographisches Verfahren nach Anspruch 42, wobei das chirale Monomer ein N-Acryloylderivat entsprechend der Formel II ist: 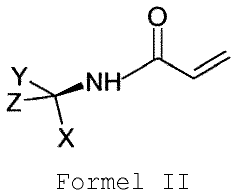 wobei Y, Z und X, welche dieselben oder unterschiedlich sind, ausgewählt sind aus H, einer optional substituierten, linearen, oder verzweigten C₁-C₁₀-Alkylgruppe, Phenyl, Biphenyl, Benzyl und optional substituiertem Aryl-C₁-C₁₀-Alkyl; oder ein molekulares Radikal, das funktionelle Gruppen oder andere stereogene Elemente umfasst.

45. Chromatographisches Verfahren nach Anspruch 42, wobei das chirale Monomer ein N-Acryloylderivat entsprechend der Formel III ist: 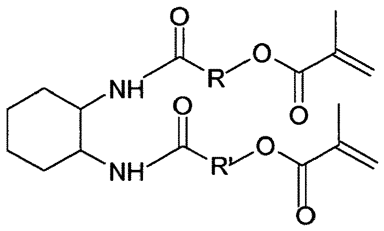 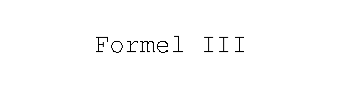 wobei R und R', welche dieselben oder unterschiedlich sind, eine lineare Kette von -CH₂- Gruppen alternierend zu -NH-, -0-, -OCO- Gruppen sind.

46. Chromatographisches Verfahren nach Anspruch 42, wobei das chirale Monomer ausgewählt ist aus Propanolol-N-acryloyl, 1,2-trans-Diphenyl-ethylendiamin-di-acryloyl, 1,2-trans-Diaminocyclohexan-di-acryloyl, Norephedrin-N-acryloyl, 1,2-trans-Diaminocyclohexan-di-2-(metacryloyloxy)-ethylsuccinat, Cinnamoyl-1,2-trans-Diaminocyclohexan, 1,2-trans-Diaminocyclohexan-di-(3-Isopropylphenyl)-1-methylethyl-ureid und 1,2-trans-Diaminocyclohexan-di-(2-methylacryloyl-oxy)-ethyl-ureid.

47. Chromatographisches Verfahren nach Anspruch 42, wobei der aktivierte, bifunktionelle Reaktionspartner, der eine Azo-Gruppe enthält, eine aktivierte Form einer α,α'-Azo-bis-(cyanocarbon)säure ist.

48. Chromatographisches Verfahren nach Anspruch 57, wobei der aktivierte, bifunktionelle Reaktionspartner, der eine Azo-Gruppe enthält, eine aktivierte Form einer 4,4'-Azo-bis-(4-cyanovalerian)säure oder 4,4'-Azo-bis-(4-cyanobutan)säure ist.

49. Chromatographisches Verfahren nach Anspruch 48, wobei die aktivierte Form der Anhydrid oder das Dichlorid der 4,4'-Azo-bis-(4-cyanovalerian)säure oder 4,4'-Azo-bis-(4-cyanobutan)säure ist.

50. Chromatographisches Verfahren nach Anspruch 42, wobei die funktionelle Gruppe, die an den Träger angeheftet ist, ausgewählt ist aus -NH₂, -OH und -SH.

51. Chromatographisches Verfahren nach Anspruch 50, wobei das Reagens, das zum Anheften einer funktionellen Gruppe an den Träger imstande ist, ein 3-Aminopropyl-trialkoxysilan ist.

52. Chromatographisches Verfahren nach Anspruch 51, wobei das 3-Aminopropyl-trialkoxysilan 3-Aminopropyl-triethoxysilan ist.

53. Chromatographisches Verfahren nach Anspruch 42, wobei die makroporöse Kieselerde mit 3-Aminopropyl-triethoxysilan behandelt ist.

54. Chromatographisches Verfahren nach Anspruch 42, wobei das gebildete chirale Polymer Seitenreste trägt, die regelmäßig orientiert und senkrecht zur Polymerstruktur und zum festen Träger sind, an den das chirale Polymer kovalent gebunden ist.

55. Chromatographisches Verfahren nach Anspruch 42, wobei das racemische Gemisch oder die Enantiomere eine Verbindung mit zentraler, axialer oder planarer Chiralität umfassen.

56. Chromatographisches Verfahren nach Anspruch 55, wobei die Verbindung eine der Verbindungen 1 bis 10 mit den folgenden Formeln ist:

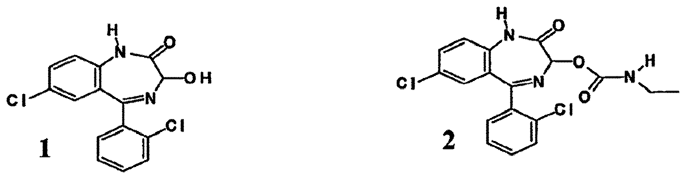

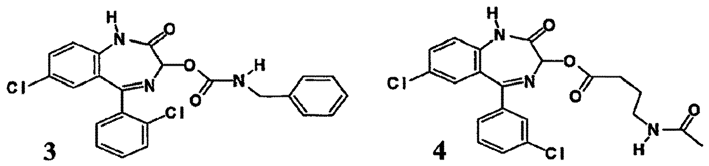

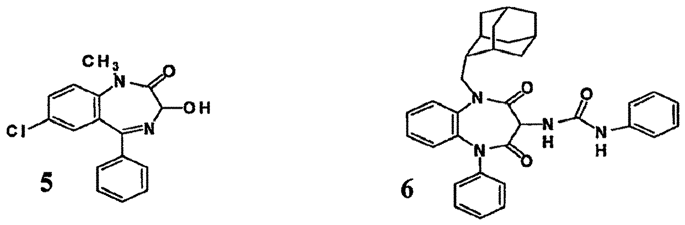

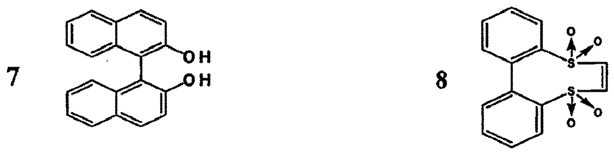

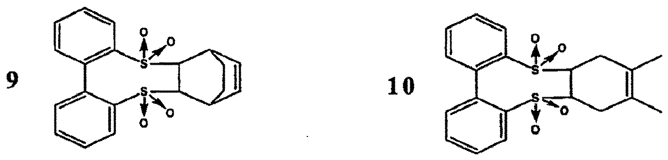

## Revendications

1. Phase stationnaire chirale de type brosse pour chromatographie liquide obtenue par :
(a) traitement d'un support solide de silice macroporeuse avec un réactif capable d'attacher un groupe fonctionnel au support,
(b) formation d'un support activé par immobilisation d'un réactif bifonctionnel activé contenant un groupe azo sur le support de (a) cependant que la capacité du groupe azo à générer des espèces radicalaires est conservée ;
(c) réaction du support activé de (b) avec des monomères chiraux choisis parmi les dérivés N-(méth)acryloyle d'amines, diamines, aminoalcools et acides aminés, dans une atmosphère inerte à une température suffisamment élevée pour permettre au groupe azo d'induire la formation de radicaux libres pour polymériser les monomères chiraux directement sur le support activé de manière à former un polymère chiral ; les monomères chiraux étant sous la forme d'énantiomères ayant un excès d'énantiomère élevé.

2. Phase stationnaire chirale de type brosse selon la revendication 1, dans laquelle le monomère chiral est un dérivé N-diacryloyle correspondant à la formule I : 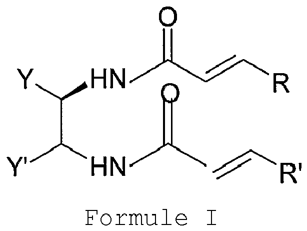 dans laquelle Y et Y', qui sont identiques ou différents, sont choisis parmi les groupes phényle, diphényle, benzyle éventuellement substitués et alkyle en C₁ à C₁₀ linéaires ou ramifiés éventuellement substitués ; ou bien Y et Y' forment ensemble un cycle polyméthylène de formule -(CH₂)ₙ- où n est un entier égal à 2, 3, 4, 5 ou 6 ; et dans laquelle R et R', qui sont identiques ou différents, sont choisis parmi H et les groupes alkyle en C₁ à C₁₀ linéaires ou ramifiés éventuellement substitués, phényle, et benzyle éventuellement substitués.

3. Phase stationnaire chirale de type brosse selon la revendication 1, dans laquelle le monomère chiral est un dérivé N-acryloyle correspondant à la formule II : 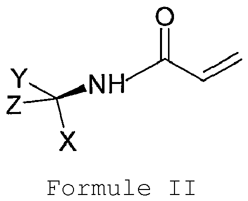 dans laquelle Y, Z et X, qui sont identiques ou différents, sont choisis parmi H et les groupes alkyle en C₁ à C₁₀ linéaires ou ramifiés éventuellement substitués, phényle, biphényle, benzyle, et aryl-alkyle en C₁ à C₁₀ éventuellement substitués ; ou un radical moléculaire comprenant des groupes fonctionnels ou d'autres éléments stéréogéniques.

4. Phase stationnaire chirale de type brosse selon la revendication 1, dans laquelle le monomère chiral est un dérivé N-acryloyle correspondant à la formule III : 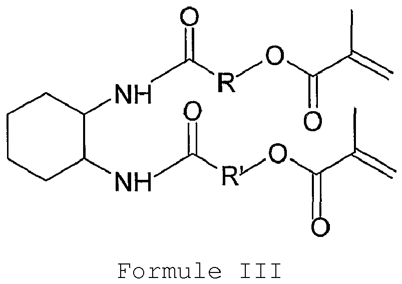 dans laquelle R et R', qui sont identiques ou différents, sont des chaînes linéaires de groupes -CH₂- alternant avec des groupes -NH-, -O-, -OCO-.

5. Phase stationnaire chirale de type brosse selon la revendication 1, dans laquelle le monomère chiral est choisi parmi le N-acryloyl-propranolol, la diacryloyl-1,2-trans-diphényléthylènediamine, le diacryloyl-1,2-trans-diaminocyclohexane, la N-acryloyl-noréphédrine, le di(2-méthacryloyloxy)éthylsuccinate de 1,2-trans-diamino-cyclohexane, le cinnamoyl-1,2-trans-diaminocyclohexane, le di(3-isopropénylphényl)-1-méthyléthyluréide de 1,2-trans-diaminocyclohexane et le di(2-méthylacryloyloxy)éthyl-uréide de 1,2-trans-diaminocyclohexane.

6. Phase stationnaire chirale de type brosse selon la revendication 1, dans laquelle le réactif bifonctionnel activé contenant un groupe azo est une forme activée d'un acide α,α'-azobis(cyanocarboxylique).

7. Phase stationnaire chirale de type brosse selon la revendication 6, dans laquelle le réactif bifonctionnel activé contenant un groupe azo est une forme activée d'acide 4,4'-azobis(4-cyanovalérique) ou d'acide 4,4'-azobis(4-cyanobutanoïque).

8. Phase stationnaire chirale de type brosse selon la revendication 7, dans laquelle la forme activée est l'anhydride ou le dichlorure de l'acide 4,4'-azobis(4-cyanovalérique) ou de l'acide 4,4'-azobis(4-cyanobutanoïque).

9. Phase stationnaire chirale de type brosse selon la revendication 1, dans laquelle le groupe fonctionnel attaché au support est choisi parmi -NH₂, -OH et -SH.

10. Phase stationnaire chirale de type brosse selon la revendication 9, dans laquelle le réactif capable d'attacher un groupe fonctionnel au support est un 3-aminopropyltrialcoxysilane.

11. Phase stationnaire chirale de type brosse selon la revendication 10, dans laquelle le 3-aminopropyltrialcoxysilane est le 3-aminopropyltriéthoxysilane.

12. Phase stationnaire chirale de type brosse selon la revendication 1, dans laquelle la silice macroporeuse est traitée avec du 3-aminopropyltriéthoxysilane.

13. Phase stationnaire chirale de type brosse selon la revendication 1, dans laquelle le polymère chiral formé porte des résidus latéraux qui sont régulièrement orientés et perpendiculaires à la structure du polymère et au support solide auquel le polymère chiral est lié de manière covalente.

14. Procédé de préparation d'une phase stationnaire chirale de type brosse pour chromatographie liquide, lequel procédé comprend :
(a) le traitement d'un support solide de silice macroporeuse avec un réactif capable d'attacher un groupe fonctionnel au support,
(b) la formation d'un support activé par immobilisation d'un réactif bifonctionnel activé contenant un groupe azo sur le support de (a) cependant que la capacité du groupe azo à générer des espèces radicalaires est conservée ;
(c) la réaction du support activé de (b) avec des monomères chiraux choisis parmi les dérivés N-(méth)acryloyle d'amines, diamines, aminoalcools et acides aminés, dans une atmosphère inerte à une température suffisamment élevée pour permettre au groupe azo d'induire la formation de radicaux libres pour polymériser les monomères chiraux directement sur le support activé de manière à former un polymère chiral ;
dans lequel les monomères chiraux sont sous la forme d'énantiomères ayant un excès d'énantiomère élevé.

15. Procédé selon la revendication 14, dans lequel le monomère chiral est un dérivé N-diacryloyle correspondant à la formule I : 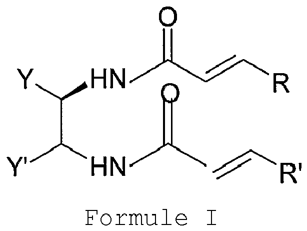 dans laquelle Y et Y', qui sont identiques ou différents, sont choisis parmi les groupes phényle, diphényle, benzyle éventuellement substitués et alkyle en C₁ à C₁₀ linéaires ou ramifiés éventuellement substitués ; ou bien Y et Y' forment ensemble un cycle polyméthylène de formule -(CH₂)ₙ- où n est un entier égal à 2, 3, 4, 5 ou 6 ; et dans laquelle R et R', qui sont identiques ou différents, sont choisis parmi H et les groupes alkyle en C₁ à C₁₀ linéaires ou ramifiés éventuellement substitués, phényle, et benzyle éventuellement substitués.

16. Procédé selon la revendication 14, dans lequel le monomère chiral est un dérivé N-acryloyle correspondant à la formule II : 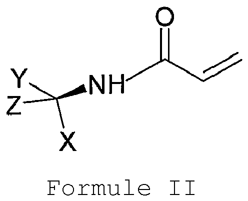 dans laquelle Y, Z et X, qui sont identiques ou différents, sont choisis parmi H et les groupes alkyle en C₁ à C₁₀ linéaires ou ramifiés éventuellement substitués, phényle, biphényle, benzyle, et aryl-alkyle en C₁ à C₁₀ éventuellement substitués ; ou un radical moléculaire comprenant des groupes fonctionnels ou d'autres éléments stéréogéniques.

17. Procédé selon la revendication 14, dans lequel le monomère chiral est un dérivé N-acryloyle correspondant à la formule III : 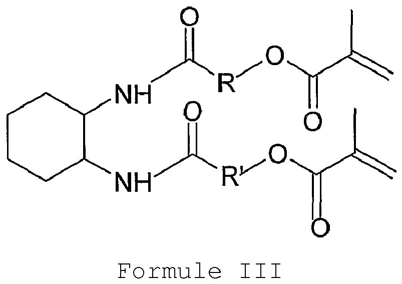 dans laquelle R et R', qui sont identiques ou différents, sont des chaînes linéaires de groupes -CH₂- alternant avec des groupes -NH-, -O-, -OCO-.

18. Procédé selon la revendication 14, dans lequel le monomère chiral est choisi parmi le N-acryloyl-propranolol, la diacryloyl-1,2-trans-diphényléthylène-diamine, le diacryloyl-1,2-trans-diaminocyclohexane, la N-acryloyl-noréphédrine, le di(2-méthacryloyloxy)éthyl-succinate de 1,2-trans-diaminocyclohexane, le cinnamoyl-1,2-trans-diaminocyclohexane, le di(3-isopropénylphényl)-1-méthyléthyluréide de 1,2-trans-diaminocyclohexane et le di(2-méthylacryloyloxy)éthyluréide de 1,2-trans-diaminocyclohexane.

19. Procédé selon la revendication 14, dans lequel le réactif bifonctionnel activé contenant un groupe azo est une forme activée d'un acide α,α'-azobis(cyanocarboxylique).

20. Procédé selon la revendication 19, dans lequel le réactif bifonctionnel activé contenant un groupe azo est une forme activée d'acide 4,4'-azobis(4-cyanovalérique) ou d'acide 4,4'-azobis(4-cyanobutanoïque).

21. Procédé selon la revendication 20, dans lequel la forme activée est l'anhydride ou le dichlorure de l'acide 4,4'-azobis(4-cyanovalérique) ou de l'acide 4,4'-azobis(4-cyanobutanoïque).

22. Procédé selon la revendication 14, dans lequel le groupe fonctionnel attaché au support est choisi parmi -NH₂,-OH et -SH.

23. Procédé selon la revendication 22, dans lequel le réactif capable d'attacher un groupe fonctionnel au support est un 3-aminopropyltrialcoxysilane.

24. Procédé selon la revendication 23, dans lequel le 3-aminopropyltrialcoxysilane est le 3-aminopropyltriéthoxysilane.

25. Procédé selon la revendication 14, dans lequel la silice macroporeuse est traitée avec du 3-aminopropyltriéthoxysilane.

26. Procédé selon la revendication 14, dans lequel le polymère chiral formé porte des résidus latéraux qui sont régulièrement orientés et perpendiculaires à la structure du polymère et au support solide auquel le polymère chiral est lié de manière covalente.

27. Colonne chromatographique pour le dédoublement de mélanges racémiques ou la purification d'énantiomères individuels comprenant une phase stationnaire chirale de type brosse obtenue par :
(a) traitement d'un support solide de silice macroporeuse avec un réactif capable d'attacher un groupe fonctionnel au support,
(b) formation d'un support activé par immobilisation d'un réactif bifonctionnel activé contenant un groupe azo sur le support de (a) cependant que la capacité du groupe azo à générer des espèces radicalaires est conservée ;
(c) réaction du support activé de (b) avec des monomères chiraux choisis parmi les dérivés N-(méth)acryloyle d'amines, diamines, aminoalcools et acides aminés, dans une atmosphère inerte à une température suffisamment élevée pour permettre au groupe azo d'induire la formation de radicaux libres pour polymériser les monomères chiraux directement sur le support activé de manière à former un polymère chiral ; les monomères chiraux étant sous la forme d'énantiomères ayant un excès d'énantiomère élevé.

28. Colonne chromatographique selon la revendication 27, dans laquelle le monomère chiral est un dérivé N-diacryloyle correspondant à la formule I : 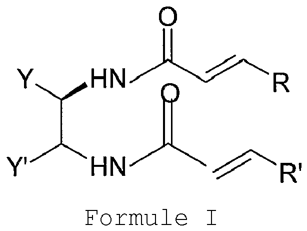 dans laquelle Y et Y', qui sont identiques ou différents, sont choisis parmi les groupes phényle, diphényle, benzyle éventuellement substitués et alkyle en C₁ à C₁₀ linéaires ou ramifiés éventuellement substitués ; ou bien Y et Y' forment ensemble un cycle polyméthylène de formule -(CH₂)ₙ- où n est un entier égal à 2, 3, 4, 5 ou 6 ; et dans laquelle R et R', qui sont identiques ou différents, sont choisis parmi H et les groupes alkyle en C₁ à C₁₀ linéaires ou ramifiés éventuellement substitués, phényle, et benzyle éventuellement substitués.

29. Colonne chromatographique selon la revendication 27, dans laquelle le monomère chiral est un dérivé N-acryloyle correspondant à la formule II : 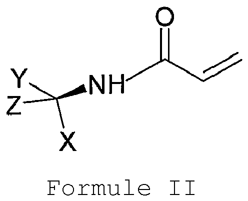 dans laquelle Y, Z et X, qui sont identiques ou différents, sont choisis parmi H et les groupes alkyle en C₁ à C₁₀ linéaires ou ramifiés éventuellement substitués, phényle, biphényle, benzyle, et aryl-alkyle en C₁ à C₁₀ éventuellement substitués ; ou un radical moléculaire comprenant des groupes fonctionnels ou d'autres éléments stéréogéniques.

30. Colonne chromatographique selon la revendication 27, dans laquelle le monomère chiral est un dérivé N-acryloyle correspondant à la formule III : 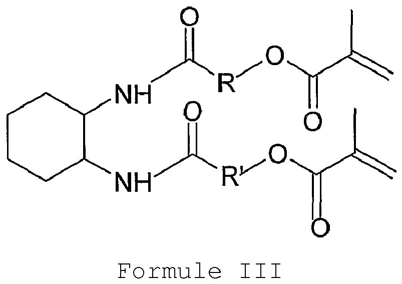 dans laquelle R et R', qui sont identiques ou différents, sont des chaînes linéaires de groupes -CH₂- alternant avec des groupes -NH-, -O-, -OCO-.

31. Colonne chromatographique selon la revendication 27, dans laquelle le monomère chiral est choisi parmi le N-acryloyl-propranolol, la diacryloyl-1,2-trans-diphényléthylènediamine, le diacryloyl-1,2-trans-diaminocyclohexane, la N-acryloyl-noréphédrine, le di(2-méthacryloyloxy)éthylsuccinate de 1,2-trans-diaminocyclohexane, le cinnamoyl-1,2-trans-diaminocyclohexane, le di(3-isopropénylphényl)-1-méthyléthyluréide de 1,2-trans-diaminocyclohexane et le di(2-méthylacryloyloxy)éthyluréide de 1,2-trans-diaminocyclohexane.

32. Colonne chromatographique selon la revendication 27, dans laquelle le réactif bifonctionnel activé contenant un groupe azo est une forme activée d'un acide α,α'-azobis(cyanocarboxylique).

33. Colonne chromatographique selon la revendication 32, dans laquelle le réactif bifonctionnel activé contenant un groupe azo est une forme activée d'acide 4,4'-azobis(4-cyanovalérique) ou d'acide 4,4'-azobis(4-cyanobutanoïque).

34. Colonne chromatographique selon la revendication 33, dans laquelle la forme activée est l'anhydride ou le dichlorure de l'acide 4,4'-azobis(4-cyanovalérique) ou de l'acide 4,4'-azobis(4-cyanobutanoïque).

35. Colonne chromatographique selon la revendication 27, dans laquelle le groupe fonctionnel attaché au support est choisi parmi -NH₂, -OH et -SH.

36. Colonne chromatographique selon la revendication 35, dans laquelle le réactif capable d'attacher un groupe fonctionnel au support est un 3-aminopropyl-trialcoxysilane.

37. Colonne chromatographique selon la revendication 36, dans laquelle le 3-aminopropyltrialcoxysilane est le 3-aminopropyltriéthoxysilane.

38. Colonne chromatographique selon la revendication 27, dans laquelle la silice macroporeuse est traitée avec du 3-aminopropyltriéthoxysilane.

39. Colonne chromatographique selon la revendication 27, dans laquelle le polymère chiral formé porte des résidus latéraux qui sont régulièrement orientés et perpendiculaires à la structure du polymère et au support solide auquel le polymère chiral est lié de manière covalente.

40. Utilisation d'une colonne chromatographique selon la revendication 27 pour des procédés de séparation analytique ou préparative à haut rendement ou à bas rendement.

41. Utilisation selon la revendication 40 pour une HPLC ou une chromatographie en SMB, en SFC ou en fluide supercritique.

42. Procédé chromatographique pour le dédoublement d'un mélange racémique ou la purification d'énantiomères individuels, comprenant l'utilisation d'une phase stationnaire chirale de type brosse obtenue par :
(a) traitement d'un support solide de silice macroporeuse avec un réactif capable d'attacher un groupe fonctionnel au support,
(b) formation d'un support activé par immobilisation d'un réactif bifonctionnel activé contenant un groupe azo sur le support de (a) cependant que la capacité du groupe azo à générer des espèces radicalaires est conservée ;
(c) réaction du support activé de (b) avec des monomères chiraux choisis parmi les dérivés N-(méth)acryloyle d'amines, diamines, aminoalcools et acides aminés, dans une atmosphère inerte à une température suffisamment élevée pour permettre au groupe azo d'induire la formation de radicaux libres pour polymériser les monomères chiraux directement sur le support activé de manière à former un polymère chiral ;
dans lequel les monomères chiraux sont sous la forme d'énantiomères ayant un excès d'énantiomère élevé.

43. Procédé chromatographique selon la revendication 42, dans lequel le monomère chiral est un dérivé N-diacryloyle correspondant à la formule I : 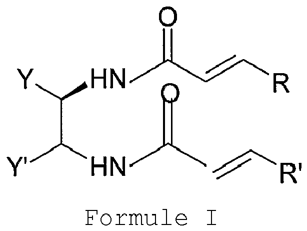 dans laquelle Y et Y', qui sont identiques ou différents, sont choisis parmi les groupes phényle, diphényle, benzyle éventuellement substitués et alkyle en C₁ à C₁₀ linéaires ou ramifiés éventuellement substitués ; ou bien Y et Y' forment ensemble un cycle polyméthylène de formule -(CH₂)ₙ- où n est un entier égal à 2, 3, 4, 5 ou 6 ; et dans laquelle R et R', qui sont identiques ou différents, sont choisis parmi H et les groupes alkyle en C₁ à C₁₀ linéaires ou ramifiés éventuellement substitués, phényle, et benzyle éventuellement substitués.

44. Procédé chromatographique selon la revendication 42, dans lequel le monomère chiral est un dérivé N-acryloyle correspondant à la formule II : 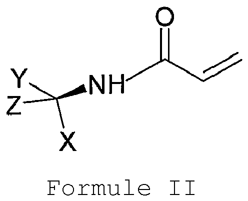 dans laquelle Y, Z et X, qui sont identiques ou différents, sont choisis parmi H et les groupes alkyle en C₁ à C₁₀ linéaires ou ramifiés éventuellement substitués, phényle, biphényle, benzyle, et aryl-alkyle en C₁ à C₁₀ éventuellement substitués ; ou un radical moléculaire comprenant des groupes fonctionnels ou d'autres éléments stéréogéniques.

45. Procédé chromatographique selon la revendication 42, dans lequel le monomère chiral est un dérivé N-acryloyle correspondant à la formule III : 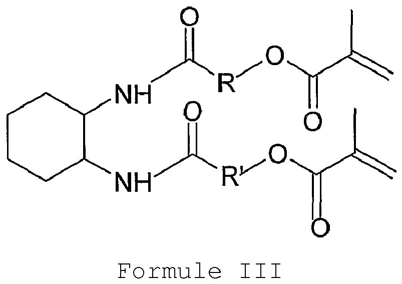 dans laquelle R et R', qui sont identiques ou différents, sont des chaînes linéaires de groupes -CH₂- alternant avec des groupes -NH-, -O-, -OCO-.

46. Procédé chromatographique selon la revendication 42, dans lequel le monomère chiral est choisi parmi le N-acryloyl-propranolol, la diacryloyl-1,2-trans-diphényléthylènediamine, le diacryloyl-1,2-trans-diaminocyclohexane, la N-acryloyl-noréphédrine, le di(2-méthacryloyloxy)éthylsuccinate de 1,2-trans-diaminocyclohexane, le cinnamoyl-1,2-trans-diaminocyclohexane, le di(3-isopropénylphényl)-1-méthyléthyluréide de 1,2-trans-diaminocyclohexane et le di(2-méthylacryloyloxy)éthyluréide de 1,2-trans-diaminocyclohexane.

47. Procédé chromatographique selon la revendication 42, dans lequel le réactif bifonctionnel activé contenant un groupe azo est une forme activée d'un acide α,α'-azobis(cyanocarboxylique).

48. Procédé chromatographique selon la revendication 57, dans lequel le réactif bifonctionnel activé contenant un groupe azo est une forme activée d'acide 4,4'-azobis(4-cyanovalérique) ou d'acide 4,4'-azobis(4-cyanobutanoïque).

49. Procédé chromatographique selon la revendication 48, dans lequel la forme activée est l'anhydride ou le dichlorure de l'acide 4,4'-azobis(4-cyanovalérique) ou de l'acide 4,4'-azobis(4-cyanobutanoïque).

50. Procédé chromatographique selon la revendication 42, dans lequel le groupe fonctionnel attaché au support est choisi parmi -NH₂, -OH et -SH.

51. Procédé chromatographique selon la revendication 50, dans lequel le réactif capable d'attacher un groupe fonctionnel au support est un 3-aminopropyl-trialcoxysilane.

52. Procédé chromatographique selon la revendication 51, dans lequel le 3-aminopropyltrialcoxysilane est le 3-aminopropyltriéthoxysilane.

53. Procédé chromatographique selon la revendication 42, dans lequel la silice macroporeuse est traitée avec du 3-aminopropyltriéthoxysilane.

54. Procédé chromatographique selon la revendication 42, dans lequel le polymère chiral formé porte des résidus latéraux qui sont régulièrement orientés et perpendiculaires à la structure du polymère et au support solide auquel le polymère chiral est lié de manière covalente.

55. Procédé chromatographique selon la revendication 42, dans lequel le mélange racémique d'énantiomères comprend un composé ayant une chiralité centrale, axiale ou plane.

56. Procédé chromatographique selon la revendication 55, dans lequel le composé est l'un quelconque des composés 1 à 10 ayant les formules suivantes :
